# EUROPEAN PATENT SPECIFICATION

(11) **EP 4 213 135 B1**
(45) Date of publication and mention of the grant of the patent: **24.12.2025**
(21) Application number: 20957723.8
(22) Date of filing: 16.10.2020
(51) Int. Cl.: G06F 7/483, H04L 9/08, G09C 1/00

(54) **SECURE EXPONENT UNIFICATION SYSTEM, SECURE EXPONENT UNIFICATION APPARATUS, SECURE EXPONENT UNIFICATION METHOD, SECURE SUM COMPUTING SYSTEM, SECURE SUM-OF-PRODUCT COMPUTING SYSTEM, AND PROGRAM**
SICHERES EXPONENTENVEREINHEITLICHUNGSSYSTEM, SICHERE EXPONENTENVEREINHEITLICHUNGSVORRICHTUNG, SICHERES EXPONENTENVEREINHEITLICHUNGSVERFAHREN, SICHERES SUMMENBERECHNUNGSSYSTEM, SICHERES SUMMENPRODUKTBERECHNUNGSSYSTEM UND PROGRAMM
SYSTÈME D'UNIFICATION D'EXPOSANT SÉCURISÉ, APPAREIL D'UNIFICATION D'EXPOSANT SÉCURISÉ, PROCÉDÉ D'UNIFICATION D'EXPOSANT SÉCURISÉ, SYSTÈME INFORMATIQUE DE SOMME SÉCURISÉE, SYSTÈME INFORMATIQUE DE SOMME DE PRODUITS SÉCURISÉ, ET PROGRAMME

(43) Date of publication of application: 19.07.2023
(73) Proprietor: NTT, Inc., Tokyo 100-8116 (JP)
(72) Inventor: IKARASHI, Dai, Musashino-shi, Tokyo 180-8585 (JP)
(74) Representative: MERH-IP Matias Erny Reichl Hoffmann Patentanwälte PartG mbB
(86) International application number: PCT/JP2020/039081
(87) International publication number: WO 2022/079894

(56) References cited:
- KAMM LIINA ET AL: "Secure floating point arithmetic and private satellite collision analysis", INTERNATIONAL JOURNAL OF INFORMATION SECURITY (IJIS), SPRINGER, HEIDELBERG, DE, vol. 14, no. 6, 18 December 2014 (2014-12-18), pages 531 - 548, XP035577326, ISSN: 1615-5262, [retrieved on 20141218], DOI: 10.1007/S10207-014-0271-8
- MEHRDAD ALIASGARI ET AL: "Secure Computation on Floating Point Numbers", IACR, INTERNATIONAL ASSOCIATION FOR CRYPTOLOGIC RESEARCH, vol. 20121210:185402, 10 December 2012 (2012-12-10), pages 1 - 31, XP061007014
- SASAKI KOTA ET AL: "Efficiency and Accuracy Improvements of Secure Floating-Point Addition over Secret Sharing", 26 August 2020, TOPICS IN CRYPTOLOGY - CT-RSA 2020 : THE CRYPTOGRAPHERS' TRACK AT THE RSA CONFERENCE 2020, SAN FRANCISCO, CA, USA, FEBRUARY 24-28, 2020, SPRINGER, 201 OLIN LIBRARY CORNELL UNIVERSITY ITHACA, NY 14853, PAGE(S) 77 - 94, XP047559667
- TAKUMA AMADA; MASAHIRO NARA; TAKASHI NISHIDE; HIROSHI YOSHIURA: "2A2-2 Multiparty Computation with Redued Communication Complexity for Floating Point Arithmetic", PREPRINTS OF THE 2018 SYMPOSIUM ON CRYPTOGRAPHY AND INFORMATION SECURITY (SCIS 2018); 23-26/01/2018, vol. 2018, 23 January 2018 (2018-01-23) - 26 January 2018 (2018-01-26), JP, pages 1 - 8, XP009530168
- MEHRDAD ALIASGARI ; MARINA BLANTON ; YIHUA ZHANG ; AARON STEELE: "Secure Computation on Floating Point Numbers", IACR, INTERNATIONAL ASSOCIATION FOR CRYPTOLOGIC RESEARCH, vol. 20121210:185402, 10 December 2012 (2012-12-10), pages 1 - 31, XP061007014

## Description

### [Technical Field]

The present invention relates to a secure computation technique, and more particularly, to a technique for performing a plurality of exponent part uniforming operations of floating points in secure computation.

### [Background Art]

The secure computation is a method for obtaining a result of a designated operation without restoring an encrypted numerical value, (for example, refer to a reference non-patent document 1). In the method of the reference non-patent document 1, encryption is performed in which a plurality of pieces of information capable of restoring a numerical value are shared to three secure computation apparatuses, and addition/subtraction, constant sum, multiplication, constant multiplication, boolean operation (negation, logical product, logical sum, exclusive or), data form conversion (integer, binary number) can be held in a state of being shared in the three secure computation apparatuses, that is, in an encrypted state. In general, the number of sharing is not limited to 3, and can be set to W (W can be a predetermined constant of 3 or more), and a protocol for realizing secure computation by cooperative calculation by W secure computation apparatuses is called a multi-party protocol.

(Reference non-patent document 1: Koji Chida, Koki Hamada, Dai Igarashi, and Katsumi Takahashi, "Reconsideration of Lightweight Verifiable Three-Party Secure Function Evaluation", In CSS, 2010.)

Conventionally, there are NPL 1 and NPL 2 as references related to protocols and implementation of secure computation for performing floating point calculation. In order to calculate the sum of the floating points, it is necessary to uniform the exponent parts of the floating points to be added. NPL3 discusses implementation details, provides methods for evaluating example elementary functions (inverse, square root, exponentiation of e, error function), implements a satellite conjunction analysis algorithm and gives benchmark results for the primitives as well as the conjunction analysis itself.

### [Citation List]

### [Non Patent Literature]

[NPL 1] Takuma Amada, Masahiro Nara, Takashi Nishide, Hiroshi Yoshiura, "Multiparty Computation for Floating Point Arithmetic with Less Communication over Small Fields," IPSJ Journal, vol. 60, No. 9, pp. 1433-1447, 2019.
[NPL 2] Randmets, J., "Programming Language for Secure Multi-party Computation Application Development," PhD thesis. University of Tartu, 2017.
[NPL 3] KAMM LIINA ET AL: "Secure floating point arithmetic and private satellite collision analysis", INTERNATIONAL JOURNAL OF INFORMATION SECURITY (IJIS), SPRINGER, HEIDELBERG, DE, vol. 14, no. 6, 18 December 2014 (2014-12-18), pages 531-548.

### [Summary of Invention]

### [Technical Problem]

However, there is a problem that the method of uniforming the exponent parts of the floating points while keeping the secrecy is poor in efficiency.

Hence, an object of the present invention is to provide a secure computation technique for effectively uniforming the exponent parts of the floating points.

### [Solution to Problem]

The present invention provides a secret exponent part uniforming system, a secret exponent part uniforming apparatus, a secret exponent part uniforming method, a secret sum calculation system, a secret product sum calculation system, and a program, having the features of respective independent claims.

One aspect of the present invention is
a secret exponent uniforming system where P is a prime number and Q is an order of a residue ring, the secret exponent part uniforming system which is comprised of three or more pieces of secret exponent part uniforming apparatuses and calculates, from a share ([[^{→}a]]^{P}, [[^{→}ρ]]^{Q}) of a floating point vector (^{→}a, ^{→}ρ) (provided that ^{→}a=(a₀, a₁, ..., aₘ₋₁), ^{→}ρ=(ρ₀, ρ₁, ..., ρₘ₋₁)), a share ([[^{→}b]]^{P}, [[^{→}ρₘₐₓ]]^{Q}) of a floating point vector (^{→}b, ^{→}ρₘₐₓ) obtained by uniforming exponent parts of the floating point vector (^{→}a, ^{→}ρ) (provided that ^{→}b=(b₀, b₁, ..., bₘ₋₁), ^{→}ρₘₐₓ=(ρₘₐₓ, ρₘₐₓ, ..., Pmax) (provided that ρₘₐₓ=max(ρ₀, ρ₁, ..., ρₘ₋₁}, |^{→}ρₘₐₓ|=m), 2^{ρ_i}aᵢ≒2^{ρ_max}bᵢ (0≦i_{<m)} is satisfied) , the secret exponent part uniforming system comprising:
a maximum value calculation means for calculating a share [[ρₘₐₓ]]^{Q} from the share [[^{→}ρ]]^{Q};
a difference calculation means for calculating a share [[^{→}ρ_{dif}]]^{Q}=[[^{→}ρ]]^{Q}-[[^{→}ρₘₐₓ]]^{Q} from the share [[^{→}ρ]]^{Q} and the share [[ρₘₐₓ]]^{Q};
a mantissa part calculation means for calculating a share [[^{→}b]]^{P}=([[b₀]]^{P}, [[b₁]]^{P}, ..., [[bₘ₋₁]]^{P}) from the share [[^{→}a]]^{P} and the share [[^{→}ρ_{dif}]]^{Q}, for i which is satisfied 0≦i<m, by calculating a share [[bᵢ]]^{P} (provided that bᵢ=2^{-ρ_dif,i}aᵢ) of the number bᵢ which is obtained by -ρ_{dif,i} bit shift of the number aᵢ, from the i-th element [[aᵢ]]^{P} of the share [[^{→}a]]^{P} and the i-th element <<ρ_{dif,i}>>^{Q} of a share <<^{→}ρ_{dif}>>^{Q} converted by replicated secret sharing from the share [[^{→}ρ_{dif}]]^{Q}; and
an output means for generating the share ([[^{→}b]]^{P}, [[^{→}ρₘₐₓ]]^{Q}) from the share [[^{→}b]]^{P} and the share [[^{→}ρₘₐₓ]]^{Q}.

### [Advantageous Effects of Invention]

According to the present invention, the exponent part of the floating point can be efficiently uniformed while keeping confidentiality.

### [Brief Description of Drawings]

[Fig. 1]

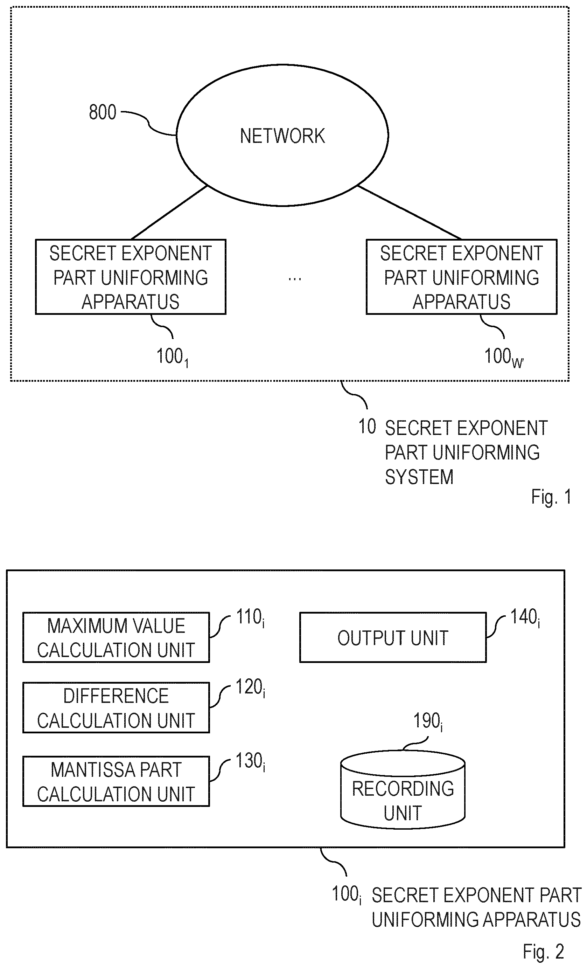

   Fig. 1 is a block diagram illustrating a configuration of a secret exponent part uniforming system 10.
[Fig. 2]
   Fig. 2 is a block diagram illustrating a configuration of a secret exponent part uniforming apparatus 100.
[Fig. 3]

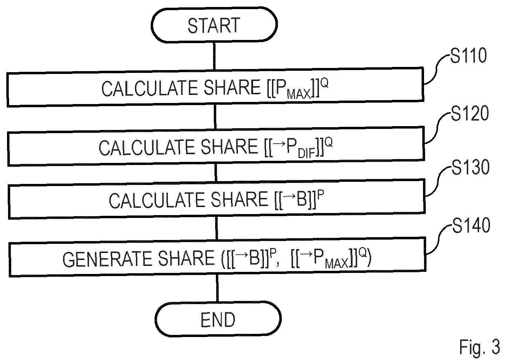

   Fig. 3 is a flowchart illustrating an operation of the secret exponent part uniforming system 10.
[Fig. 4]

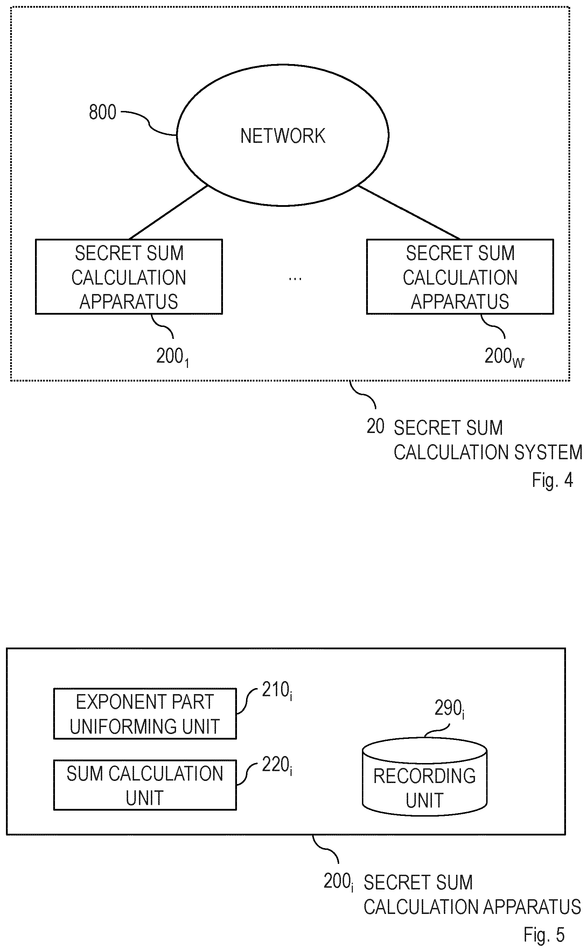

   Fig. 4 is a block diagram illustrating a configuration of a configuration of a secret sum calculation system 20**.**
[Fig. 5]
   Fig. 5 is a block diagram illustrating a configuration of a secret sum calculation apparatus 200**.**
[Fig. 6]

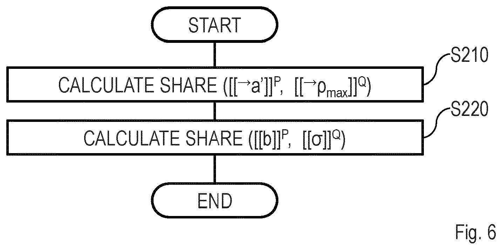

   Fig. 6 is a flowchart illustrating an operation of the secret sum calculation system 20.
[Fig. 7]

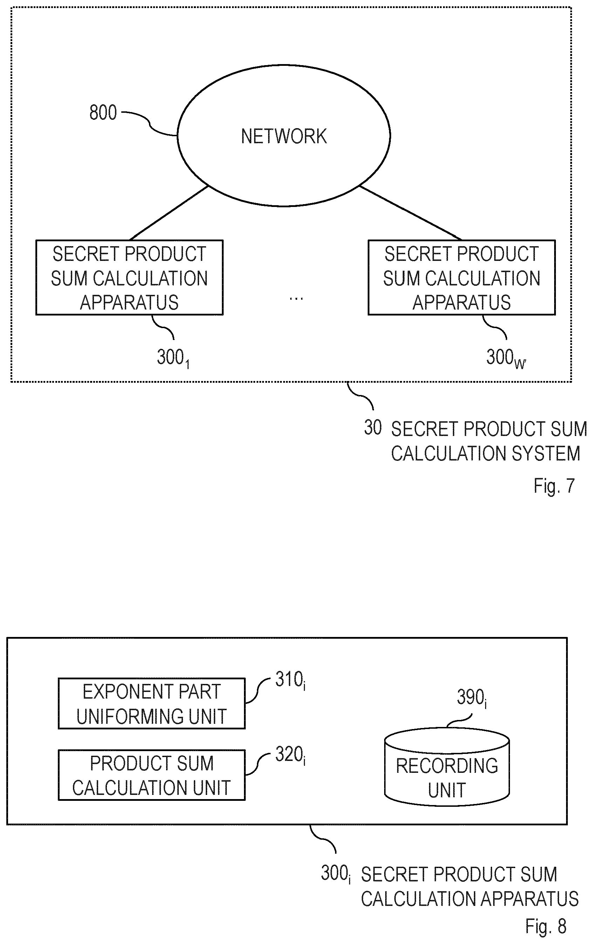

   Fig. 7 is a block diagram illustrating a configuration of a secret product sum calculation system 30.
[Fig. 8]
   Fig. 8 is a block diagram illustrating a secret product sum calculation apparatus 300.
[Fig. 9]

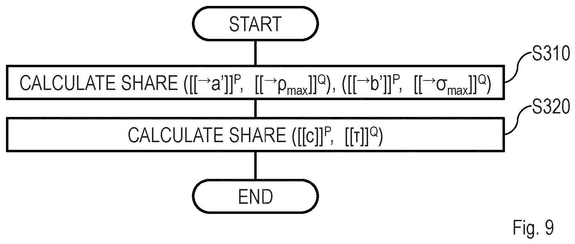

   Fig. 9 is a flowchart illustrating an operation of the secret product sum calculation system 30.
[Fig. 10]

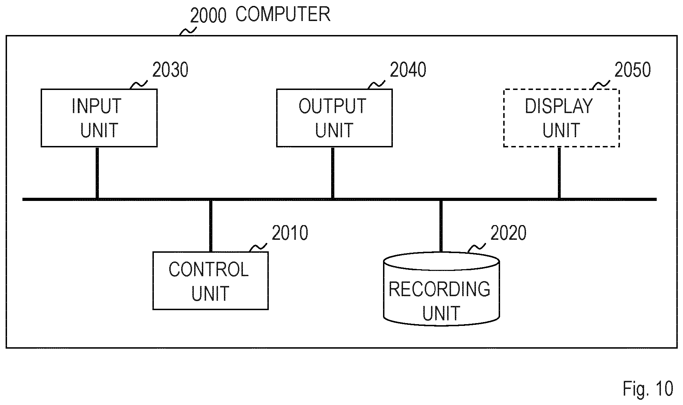

   Fig. 10 is a diagram showing an example of a functional configuration of a computer that realizes each apparatus according to the embodiment of the present invention.

### [Description of Embodiments]

Hereinafter, embodiments of the present invention will be described in detail. Further, constituent units having the same function are denoted with the same number, and overlapping descriptions thereof are omitted.

Prior to the description of each embodiment, the notation in the present specification will be explained.

^(caret) indicates a superscript. For example, x^{y^z} means that y^{z} is a superscript to x, and x_{y^z} means that y^{z} is a subscript to x. Further, _ (under score) indicates a subscript. For example, x^{y_z} indicates that y_{z} is a superscript to x, and x_{y_z} indicates that y_{z} is a subscript to x.

Superscripts of a letter x, such as "^" and "~" in ^x and ~x, are to be written directly above "x", but these are written as ^x and ~x due to constraints of notation in the specification.

### <Technical background>

The secure computation in each embodiment of the present invention is constructed using an existing secure computation protocol. Hereinafter, a notation will be described.

### <<Notation>>

P is a prime number. For example, it is preferable to set the Mersenne prime number P = 2⁶¹-1. p is a number of bits of the prime number P. It should be noted that p=|P| may be expressed. When P is a Mersenne prime number, p is a prime number. For example, if P=2⁶¹-1, p=61 is obtained. Also, Q is an order of a residue ring. The order Q is used as the prime number P and its bit number p. The order Q can be used for a exponent part of a floating point. When the order Q is used for an exponent part of a floating point, Q = 2¹³-1, for example.

It is assumed that k is a threshold of a secret sharing. For example, it is preferable to set k=2. And n is s sharing number of secret sharing (that is, a number of parties of secure computation). For example, it is preferable to set n=3.

[[X]]^{y} represents a share in which a mod y element x is (k, n)-secret shared. As a method of secret sharing, for example, Shamir secret sharing or replicated secret sharing can be used. In the following, The share of (k, n)- replicated secret sharing for the mod y element x is expressed by <<x>>^{y}. Since (k, n)-replicated secret sharing is (k, n)-secret sharing, a protocol applicable to (k, n)-secret sharing can be applied to (k, n)- replicated secret sharing. When a share is expressed as <<x>>^{y}, it means that the property of the replicated secret sharing is utilized. In particular, (k, k)-replicated secret sharing is called (k, k)-additive secret sharing. The mod y element x is expressed as a share <x>^{y} in which (k, k)-additive secret sharing is performed.

[[x]]^{2^m} represents a share in which m shares in the form of [[x]]² are arranged. In some cases, [[x]]^{2^m} is regarded as a bit representation of a number.

x≒y indicates that x and y are equal as real numbers on the computer. That is, the difference between x and y is within a certain error range.

For two numbers a, d, a/d represents the value of integer division for truncating the decimal part. Therefore, the integer division by the number of powers of 2 is equivalent to the right shift, and (a/d)_{Re} represents the value of real number division for the two numbers a, d.

For the number a, ceiling(a) represents the minimum integer of a or more.

(prop) represents 1 when proposition prop is established, and 0 when proposition prop is not established. For example, (1>0) is 1.

A floating point 2^{b}a, (provided that a and b represent a mantissa part and an exponent part respectively), are represented as a floating point (a, b). Further, m floating points 2^{b_0}a₀, 2^{b_1}a₁, ...,2^{b_m-1}aₘ₋₁ (provided that aᵢ, bᵢ(0≦i<m) represent a mantissa part and an exponent part respectively), are represented as a floating point vector (^{→}a, ^{→}b) (provided that ^{→}a=(a₀, a₁, ..., aₘ₋₁), ^{→}b=(b₀, b₁, ..., bₘ₋₁)). In some cases, the length m of the vector ^{→}a=(a₀, a₁, ..., aₘ₋₁) may be expressed as |^{→}a|.

### <<Existing secure computation protocol>>

First, existing secure computation protocols used in the present invention will be described. For addition and subtraction, constant sum, multiplication, constant multiplication, a boolean operation (negation, logical product, logical sum, exclusive or), data form conversion (integer, binary number), calculation of the exponential function, existing secure computation protocols are used. The following protocols are used as existing protocols used in the present invention.

### [The conversion from (k, n)-secret sharing (replicated secret sharing) to (k, k)-additive secret sharing]

Input: a share [[x]]^{y} of value x (a share <<x>>^{y} of value x). Output: a share <x>^{y} of value x.

Specifically, there is a method described in reference non-patent document 2.

(Reference non-patent document 2: Kikuchi, R., Ikarashi, D., Matsuda, T., Hamada, K. and Chida, K., "Efficient Bit-Decomposition and Modulus-Conversion Protocols with an Honest Majority," 23rd Australasian Conference on Information Security and Privacy (ACISP 2018), Lecture Notes in Computer Science, Vol. 10946, Springer, pp. 64-82, 2018.)

### [The conversion from (k, k)-additive secret sharing to the (k, n)-secret sharing (replicated secret sharing)]

Input: a share <x>^{y} of value x.

Output: a share [[x]]^{y} of value x (a share <<x>>^{y} of value x). Specifically, there is a method described in reference non-patent document 2.

### [mod 2 → mod q conversion]

Input: a share [[x]]² of value x (a share <<x>>² of value x). Output: a share [[x]]^{q} of value x (a share <<x>>^{q} of value x). Specifically, there is a method described in reference non-patent document 2.

### [Shift amount public right shift]

Input: a share [[x]]^{q} of value x, a shift amount p
Output: a share [[x/2^{ρ}]]^{q} of a value obtained by shifting value x to the right by p bits

Specifically, there is a method described in reference non-patent document 3.

(Reference non-patent document 3: Ibuki Mishina, Dai Igarashi, Koki Hamada, Ryo Kikuchi, "Designs and Implementations of Efficient and Accurate Secret Logistic Regression," CSS2018, 2018.

### [Bulk shift amount public right shift]

Input: a share [[x]]^{q} of value x, shift amounts ρ₀, ..., ρₘ₋₁ Output: shares [[x/2^{ρ_0}]]^{q}, ..., [[x/2^{ρ_m-1}]]^{q} of values which are obtained by right-shifting of value x by ρ₀ bit, ..., ρₘ₋₁ bit. Specifically, there is a method described in reference non-patent document 4.

(Reference non-patent document 4: Dai Igarashi, "Elementary functions more than M op/s in the secure computation," SCIS2020, 2020.)

As a self-evident method, bulk shift amount public right shift can be formed by repeating shift amount public right shift.

### [Modulus conversion using quotient transfer]

Input: a share <<x>>^{q} of value x.

Output: a share <<x>>^{r} of value x.

Specifically, there is a method described in reference non-patent document 2.

### [Bit decomposition]

Input: a share [[x]]^{q} of value x.

Parameter: a maximum number M of bits of input values.

Output: a share [[x]]^{2^M} of value x.

Specifically, there is a method described in reference non-patent document 2.

### <<Secure computation protocol of the present invention>>

Next, the secure computation protocols of the present invention will be described.

### [Multiplicative rotation (Shift amount concealment left shift)]

Input: a share [[a]]^{P} of value a, a share <<ρ>>^{p} of a rotation amount (shift amount) ρ(≧0).

Output: a share [[2^{ρ}a]]^{P} of a value obtained by left-shifting value a by p bits.

Although the share to be output can be calculated by using a protocol of multiplication or exponential function calculation, the share can be calculated by using a method using the idea of the random conversion (refer to reference non-patent document 5). As a specific example, a case where n=3 will be described.

(Reference non-patent document 5: Dai Igarashi, Koki Hamada, Ryo Kikuchi, Koji Chida, " The improvement of the secure computation basic sort directed to statistical processing of 1 second of response to the Internet environment," SCIS2014, 2014.

### (Round 1)

step1: A share [[a]]^{P} is converted into (k, k)-additive secret share <a>^{P} which party 0 and party 1 have.

step2: The party 0 and the party 1 share a random number r₀₁. The parties 1 and 2 share a random number r₁₂.

step3: The party 0 calculates b₀=2^{(<<ρ>>^p)_01}<a>^{P⁰}-r₀₁ and sends b₀ to the party 2.

Here, <<ρ>>p₀₁ represents a share held by the party 0 and the party 1 with respect to the share <<ρ>>^{p}. In addition, <a>^{P⁰} represents a share held by the party 0 with respect to the share <a>^{P}.

step4: The party 1 calculates b₂=2^{(<<ρ>>^p)_12}(2^{(<<ρ>>^p)_01}<a>^{P¹}+r₀₁)-r₁₂, and sends b₁ to the party 0**.**

Here, <<ρ>>^{p}₁₂ represents a share held by the party 1 and the party 2 with respect to the share <<ρ>>^{p}. In addition, <a>^{P}₁ represents a share held by the party 1 with respect to the share <a>^{P}.

### (Round 2)

step5: The party 0 calculates <c>^{P⁰}=2^{(<<ρ>>^p)_20}b₁.

Here, <<ρ>>^{p²⁰} represents a share held by the party 2 and the party 0 with respect to the share <<ρ>>^{p}.

Step6: The party 2 calculates <c>^{P}₂=2^{(<<ρ>>^p)_20}(2^{(<<ρ>>^p)_12}b₀+r₁₂).

### (Round 3)

Step7: A share <c>^{P} is converted into (k, k)-secret share [[c]]^{P}.

Here, c=2^{ρ}a is established.

### [Shift amount concealment right shift]

Input: a share [[a]]^{P} of value a, a share <<ρ>>^{p} of a shift amount p.

Parameter: an upper limit value M of shift amount.

Provided that, 0≦ρ≦M, a value 2^{M}a obtained by left-shifting value a by M bits does not overflow.

Output: a share [[a/2^{ρ}]]^{P} of a value obtained by right-shifting value a by p bits.

Step1: calculate <<M-ρ>>^{p}.

Step2: By using multiplicative rotation, calculate a share [[2^{M-ρ}a]]^{P} of a value obtained by left-shifting value a by M-p bits.

Step3: By using shift amount public right shift, a share [[a/2^{ρ}]]^{P}=[[2^{M-ρ}a/2^{M}]]^{P} of a value obtained by right-shifting a value 2^{M-ρ}a to by M bits is calculated.

### [Shift amount concealment shift (part 1)]

Input: a share [[a]]^{P} of value a, a share <<ρ>>^{Q} of a shift amount p (provided that when ρ≧0 left-shifting is represented, when p<0 right-shifting is represented).

Parameter: an upper limit value M which can be taken by the position of the MSB (Most Significant Bit) of input values. Output: a share [[s]]^{P} of value s obtained by shifting value a by p bits.

Here, s=2^{ρ}a is established.

Step1: A share <<ρ>>^{p} is calculated by using modulus conversion. For example, a modulus conversion using the above-mentioned quotient transfer can be used for the modulus conversion.

Step2: [[f_{L}]]²=[[(ρ≧0)]]² is calculated by size comparison.

Step3: By using mod 2 → mod p conversion, <<f_{L}>>^{p} is calculated.

Step4: <<ρ'>>^{p}=<<ρ>>^{p}+M-M<<f_{L}>>^{p} is calculated.

Step5: [[b]]^{P}=[[2^{ρ'}a]]^{P} is calculated by using multiplicative rotation.

Step6: [[c]]^{P}=[[2^{ρ'}a/2^{M}]]^{P} is calculated by using shift amount public right shift.

Step7: [[f_{L}]]^{P} is calculated by using mod 2 → mod P conversion.

Step8: [[s]]^{P}=[[c]]^{P}+([[b]]^{P}-[[c]^{P})[[f_{L}]]^{P} is calculated.

This expression is a selection gate, so that s=c when p<0, and s=b when ρ≧0.

### [Shift amount concealment shift (part 2)]

Input: a share [[a]]^{P} of value a, a share <<ρ>>^{Q} of a shift amount p (provided that when ρ≧0 left-shifting is represented, when p<0 right-shifting is represented).

Parameter: an upper limit value M which can be taken by the MSB position of input values, an upper limit value M' of the MSB position allowed by shares.

Output: a share [[s]]^{P} of value s obtained by shifting value a by p bits.

Here, s=2^{ρ}a is established.

Step1: u=M'-M+1, d=ceiling(((M-1)/u)_{Re}) are calculated.

Here, u is the right shift amount which can be covered by one shift amount concealment right shift (specifically, the amount in the range of M'-M bits from 1), and d is the number of execution times of the shift amount concealment right shift necessary for performing the right-shifting in the range of 1 to M-1 bits.

Step2: A share <<ρ>>^{p} is calculated by using modulus conversion. For example, a modulus conversion using the above-mentioned quotient transfer can be used for the modulus conversion.

Step3: By size comparison, [[f₀]]²=[[(ρ≧-M+1)]]², [[f₁]]²=[[(ρ≧-M+1+u)]]², ..., [[f_{d-1}]]2=[[(ρ≧-M+1+(d-1)u)]]², [[f_{L}]]²=[[(ρ≧0)]] are calculated.

In this case, if is f_{L}; f_{d-1}, if is f_{d-1}; f_{d-2}, ... are established. The above-mentioned characteristics of f₀, f₁, ..., f_{d-1}, f_{L} are referred to as transitive flags.

step4: BY using mod 2 → mod p conversion, <<f₁>>^{p}, <<f₂>>^{p}, ..., <<f_{d-1}>>^{p}, <<f_{L}>>^{p} are calculated.

In this step, the calculation of <<f₀>>^{p} is not required.

step5: <<ρ'>>^{p}=<<ρ>>^{p}+M-1-u(Σ_{1≦i<d}<<fᵢ>>^{p})+((d-1)u-M+1)<<f_{L}>>^{p} is calculated.

Step6: By using multiplicative rotation, [[b]]^{P}=[[2^{ρ'}a]]^{P} is calculated.

step7: By using bulk shift amount public right shift, [[c₀]]^{P}=[[2^{ρ'}a/2^{M-1}]]^{P}, [[c₁]]^{P}=[[2^{ρ'}a/(2^{M-1-u})]]^{P}, ..., [[c_{d-1}]]^{P}=[[2^{ρ'}a/(2^{M-1-(d-1)u})]]^{P} are calculated.

step 8: By using mod 2 → mod P conversion, [[f₀]]^{P}, [[f₁]]^{P}, ..., [[f_{d-1}]]^{P}, [[f_{L}]]^{P} are calculated.

In this step, the calculation of [[f₀]]^{P} is necessary.

step9: [[s]]^{P}=[[c₀]]^{P}[[f₀]]^{P}+([[c₁]]^{P}-[[c₀]]^{P})[[f₁]]^{P}+...+([[c_{d-1}]]^{P}-[[c_{d-2}]]^{P})[[f_{d-1}]]^{P}+[[b]]^{P}-[[c_{d-1}]]^{P})[[f_{L}]]^{P} is calculated.

This expression is a selection gate for transitive flags f₀, f₁, ..., f_{d-1}, f_{L}, and s= 0 when f₀, f₁, ..., f_{d-1}, f_{L} are all 0, s=c₀ when f₀, s=c₁ when f₁, **...,** s=b when f_{L}.

### [Shift amount concealment shift (part 3)]

Input: a share [[a]]^{P} of value a, a share <<ρ>>^{Q} of a shift amount p (provided that when ρ≧0 left-shifting is represented, when p<0 right-shifting is represented).

Parameter: an upper limit value M which can be taken by the MSB position of input values, an upper limit value M' of the MSB position allowed by shares.

Output: a share [[s]]^{P} of value s obtained by shifting value a by p bits.

Here, s=2^{ρ}a is established.

Step1: It is assumed that u is an integer satisfying u≦M'-M+1. Further, [R, R'] is the range of the right shift amount covered by the divided right shift, and d is an integer satisfying d≧ceiling((((R'-R+1)/u)_{Re}).

Hereinafter, {}_{L} indicates that when the shift amount larger than -R need not be taken into consideration (for example, when it is known that the shift is right shift), the calculation of the portion surrounded by the parentheses can be omitted. In addition, {}₀ indicates that, when the shift amount smaller than -R' is not required to be considered (for example, when it is found that the right shift amount is larger than the value to which the shift amount concealment shift (part 1) can be applied but is not an extremely large value), the calculation of the part surrounded by the parentheses can be omitted.

Step2: A share <<ρ>>^{p} is calculated by using modulus conversion. For example, a modulus conversion using the above-mentioned quotient transfer can be used for the modulus conversion.

Step3: By size comparison, {[[f₀]]²=[[(ρ≧-R')]]²,}₀ [[f₁]]²=[[(ρ≧-R'+u)]]², ..., [[f_{d-1}]]²=[[(ρ≧R'+(d-1)u)]]²{, [[f_{L}]]²=[[(ρ≧R+1)]]²}_{L} are calculated.

In this case, if is f_{L}; f_{d-1}, if is f_{d-1}; f_{d-2}, **...** are established. The above-mentioned characteristics of f₀, f₁, **...,** f_{d-1}, f_{L} are referred to as transitive flags.

step4: By using mod 2 → mod p conversion, <<f₁>>^{p}, <<f₂>>^{p}, **...,** <<f_{d-1}>>^{p}{, <<f_{L}>>^{p}}_{L} are calculated.

step5: <<ρ'>>^{p}=<<ρ>>^{p}+R'-u(Σ_{1≦i<d}<<fᵢ>>^{p}){+((d-1)u-R')<<f_{L}>>^{p}}_{L} is calculated.

step6: By using multiplicative rotation, [[b]]^{P}=[[2^{ρ'}a]]^{P} is calculated.

step7: By using bulk shift amount public right shift, {[[c₀]]^{P}=[[2^{ρ'}a/2^{R'}]]^{P},}₀ [[c₁]]^{P}=[[2^{ρ'}a/(2^{R'-u})]]^{P}, ..., [[c_{d-1}]]^{P}=[[2^{ρ'}a/(2^{R'-(d-1)u})]]^{P} are calculated.

step8: By using mod 2 → mod P conversion, {[[f₀]]^{P},}₀[[f₁]]^{P}, ..., [[f_{d-1}]]^{P}{, [[f_{L}]]^{P}}_{L} are calculated.

step9: [[s]]^{P}=[[c₀]^{P}[f₀]]^{P}+(}₀[[c₁]]^{P}{-[[c₀]]^{P})}₀[[f₁]]^{P}+...+([[c_{d-1}]]^{P}-[[c_{d-2}]]^{P})[[f_{d-1}]]^{P}{+([[b]]^{P}-[[c_{d-1}]]^{P})[[f_{L}]]^{P}}_{L} is calculated.

This expression is a selection gate for transitive flags f₀, f₁, ..., f_{d-1}, f_{L}, and s= 0 when f₀, f₁, ..., f_{d-1}, f_{L} are all 0, s=c₀ when f₀, s=c₁ when f₁, ..., s=b when f_{L}.

When R= 1, R'= M-1, u= M'-M+1, d=ceiling(((R'-R+1)/u)_{Re}), the shift amount concealment shift (part 3) becomes the shift amount concealment shift (part 2). Therefore, the shift amount concealment shift (part 3) is a protocol generalized the shift amount concealment shift (part 2).

### [Maximum value calculation]

Input: a share [[^{→}a]]^{Q} of vector ^{→}a, (provided that ^{→}a=(a₀, a₁, ..., aₘ₋₁), aᵢ(0≦i<m) are bit representation integers.

Parameter: a maximum number M of bits of input values.

Output: a share [[aₘₐₓ]]^{Q} of the maximum value aₘₐₓ (provided that aₘₐₓ=max{a₀, a₁, ..., aₘ₋₁}).

Step1: A share [[a_{max,M-1}]]^{Q} of a_{max,M-1} which is an OR of the most left bit a_{i,M-1}(0≦i<m) of aᵢ(0≦i<m) (provided that a_{max,M-1}=a_{0,M-1} OR a_{1,M-1} OR... OR a_{m-1,M-1}) is calculated.

step2: [[e_{i,M-1}]]^{Q}=[[a_{i,M-1} XOR a_{max,M-1}]]^{Q} is calculated for 0≦i<m.

step3: for j=M-2 to 0 do

Step3-1: For 0≦i<m, [[b_{i,j}]]^{Q}=[[a_{i,j}Λe_{i,j+1}]]^{Q} is calculated.

Step3-2: A share [[a_{max,j}]]^{Q} of a_{max,j} which is OR of b_{i,j}(0≦i<m) (provided that a_{max,j}=b_{0,j} OR b_{1,j} OR... OR b_{m-1,j}) is calculated.

Step3-3: For 0≦i<m, [[e'_{i,j}]]^{Q}=[[e_{i,j+1}Λ ¬a_{max,j}]]^{Q} is calculated.

step3-4: For 0≦i<m, [[e_{i,j}]]^{Q}=[[b_{i,j} XOR e'_{i,j}]]^{Q} is calculated.

Step4: aₘₐₓ=a_{max,M-1}a_{max,M}...a_{max,0} (a_{max,M-1}a_{max,M}...a_{max,0} is a bit representation to assume a_{max,j} as the j-th digit from right side) is generated.

In the case of executing this protocol after executing the bit decomposition described above, Q = 2 may be used.

### [Uniforming exponent part of floating point vector]

Input: a share ([[^{→}a]]^{P}, [[^{→}ρ]]^{Q}) of a floating point vector (^{→}a, ^{→}ρ) (provided that ^{→}a=(a₀, a₁, ..., aₘ₋₁), ^{→}ρ=(ρ₀, ρ₁, ..., ρₘ₋₁)) Output: a share ([[^{→}b]]^{P}, [[^{→}ρₘₐₓ]]^{Q}) of a floating point vector (^{→}b, ^{→}ρₘₐₓ) obtained by uniforming exponent parts of the floating point vector (^{→}a, ^{→}ρ) (provided that ^{→}b=(b₀, b₁, ..., bₘ₋₁), ^{→}ρₘₐₓ=(ρₘₐₓ, ρₘₐₓ, ..., ρₘₐₓ) (provided that ρₘₐₓ=max{ρ₀, ρ₁, ..., ρₘ₋₁}, |^{→}ρₘₐₓ|=m))

Here, 2^{ρ_i}aᵢ≒2^{ρ_max}bᵢ (0≦i<m) is satisfied.

Step1: By using maximum value calculation, [[ρₘₐₓ]]^{Q} is obtained from [[^{→}ρ]]^{Q}.

Step2: [[^{→}ρ_{dif}]]^{Q}=[[^{→}ρ]]^{Q}-[[^{→}ρₘₐₓ]]^{Q} is calculated.

step3: A share [[^{→}b]]^{P}=([b₀]]^{P}, [b₁]]^{P}, ..., [[bₘ₋₁]]^{P}) is calculated, with shift amount concealment shift (part 2) or shift amount concealment shift (part 3), by calculating a share [[bᵢ]]^{P} (provided that bᵢ=2^{-ρ_dif,i}aᵢ) of the number bᵢ which is obtained by -ρ_{dif,i} bit shift of the number aᵢ, from the i-th element [[aᵢ]]^{P} of the share [[^{→}a]]^{P} and the i-th element <<ρ_{dif,i}>>^{Q} of a share <<^{→}ρ_{dif}>>^{Q} converted by replicated secret sharing from the share [[^{→}ρ_{dif}]]^{Q}.

step4: A share ([[^{→}b]]^{P}, [[→ρₘₐₓ]]^{Q}) is generated.

### [Sum of floating point vector]

Input: a share ([[^{→}a]]^{P}, [[^{→}ρ]]^{Q}) of a floating point vector (^{→}a, ^{→}ρ) (provided that ^{→}a=(a₀, a₁, ..., aₘ₋₁), ^{→}ρ=(ρ₀, ρ₁, ..., ρₘ₋₁)).

Parameter: vector length m**.**

Output: a share ([[b]]^{P}, [[σ]]^{Q}) of a floating point (b, σ) which is a sum of floating points which are elements of the floating point vector (^{→}a, ^{→}ρ).

Here, Σ_{0≦i<m}2^{ρ_i}aᵢ≒2^{σ}b is satisfied.

step1: By using uniforming exponent part of floating point vector, a share ([[^{→}a']]^{P}, [[^{→}ρₘₐₓ]]^{Q}) obtained by uniforming exponent parts of elements of the share ([[^{→}a]]^{P}, [[^{→}ρ]]^{Q}) (provided that ^{→}a'=(a'₀, a'₁, ..., a'ₘ₋₁), ^{→}ρₘₐₓ=(ρₘₐₓ, pmax, ..., ρₘₐₓ) (provided that ρₘₐₓ=max{ρ₀, ρ₁, *...,* ρₘ₋₁}, |^{→}ρₘₐₓ|=m), 2^{ρ_i}aᵢ≒2^{ρ_max} a'ᵢ(0≦i<m) is satisfied) is calculated.

Step2: A share ([[b]]^{P}, [[σ]]^{Q}) (provided that b=Σ_{0≦i<m}a'ᵢ, σ=ρₘₐₓ) is calculated.

### [Product sum of floating point vector]

Input: a share ([[^{→}a]]^{P}, [[^{→}ρ]]^{Q}) of a floating point vector (^{→}a, ^{→}ρ) (provided that ^{→}a=(a₀, a₁, ..., aₘ₋₁), ^{→}ρ=(ρ₀, ρ₁, ..., ρₘ₋₁)), a share ([[^{→}b]]^{P}, [[^{→}σ]]^{Q}) of a floating point vector (^{→}b, ^{→}σ) (provided that ^{→}b=(b₀, b₁, ..., bₘ₋₁), ^{→}σ=(σ₀, σ₁, ..., σₘ₋₁)).
Parameter: vector length m
Output: a share ([[c]]^{P}, [[σ]]^{Q}) of a floating point (c, τ) which is a product sum of floating points which are elements of the floating point vector (^{→}a, ^{→}ρ) and floating points which are elements of the floating point vector (^{→}b, ^{→}σ)

Here, Σ_{0≦i<m}2^{ρ_i+σ_i}aᵢbᵢ≒2^{τ}c is satisfied.

Step1: By using uniforming exponent part of floating point vector, a share ([[^{→}a']]^{P}, [[→ρₘₐₓ]]^{Q}) obtained by uniforming exponent parts of elements of the share ([[^{→}a]]^{P}, [[^{→}ρ]]^{Q}) (provided that ^{→}a'=(a'₀, a'₁, **...,** a'ₘ₋₁), ^{→}ρₘₐₓ=((ρ_{max,} ρₘₐₓ, ..., ρₘₐₓ) (provided that ρₘₐₓ=max{ρ₀, ρ₁, ..., ρₘ₋₁}, |^{→}ρₘₐₓ|=m), 2^{ρ_i}aᵢ≒2^{ρ_max} a'ᵢ(0≦i<m) is satisfied), and a share ([[^{→}b']]^{P}, [[^{→}σₘₐₓ]]^{Q}) obtained by uniforming exponent parts of elements of the share ([[^{→}b]]^{P}, [[^{→}σ]]^{Q}) (provided that ^{→}b'=(b'₀, b'₁, ..., b'ₘ₋₁), ^{→}σₘₐₓ=(σₘₐₓ, σₘₐₓ, ..., σₘₐₓ) (provided that σₘₐₓ=max{σ₀, σ₁, ..., σₘ₋₁}, |^{→}σₘₐₓ|=m), 2^{σ_i}bᵢ≒2^{σ_max}b'ᵢ(0≦i<m) is satisfied) are calculated.

Step2: A share ([[c]]^{P}, [[τ]]^{Q}) (provided that c=Σ_{0≦i<m}a'ᵢb'ᵢ, τ=ρₘₐₓ+σₘₐₓ) is calculated.

### <First embodiment>

In the following, the secret exponent part uniforming system 10 will be described below with reference to Fig. 1 to Fig. 3. Fig. 1 is a block diagram showing a configuration of the secret exponent part uniforming system 10. The secret exponent part uniforming system 10 includes W pieces of secret exponent part uniforming apparatuses 100₁, ..., 100_{W} (W is a prescribed integer of 3 or more). The secret exponent part uniforming apparatuses 100₁, ..., 100_{W} are connected to a network 800 and can communicate with each other. The network 800 may be, for example, a communication network such as the Internet or a broadcast communication path. Fig. 2 is a block diagram showing a configuration of the secret exponent part uniforming apparatus 100ᵢ (1≦1≦W). Fig. 3 is a flowchart illustrating a operation of the secret exponent part uniforming system 10.

As shown in Fig. 2, the secret exponent part uniforming apparatus 100ᵢ includes a maximum value calculation unit 110ᵢ, a difference calculation unit 120ᵢ, a mantissa part calculation unit 130ᵢ, an output unit 140ᵢ, And a recording unit 190ᵢ. Each component unit of the secret exponent part uniforming apparatus 100ᵢ excluding the recording unit 190ᵢ is configured to execute an operation required for secure computation, that is, an operation required for realizing the function of each component part among protocols explained in <Technical background>. A specific functional configuration for realizing individual operations in the present invention is sufficient to be a configuration capable of executing the algorithms disclosed in each of the reference non-patent documents 1 to 5, for example, and since these are a conventional configuration, detailed description thereof will be omitted. The recording unit 190ᵢ is a component for properly recording information necessary for the processing of the secret exponent part uniforming apparatus 100ᵢ.

By cooperative calculation by W secret exponent part uniforming apparatuses 100ᵢ, the secret exponent part uniforming system 10 realizes secure computation of exponent part uniforming of a floating point vector being a multi-party protocol. Therefore, a maximum value calculation means 110 (not shown) of the secret exponent part uniforming system 10 is constituted of the maximum value calculation units 110₁, ..., 110_{W}, a difference calculation means 120 (not shown) is constituted of the difference calculation units 120₁, ..., 120_{W}, a mantissa part calculating means 130 (not shown) is constituted of the mantissa part calculating units 130₁, ..., 130_{W}, and an output means 140 (not shown) is constituted of the output units 140₁, ..., 140_{W}.

It is assumed that P is a prime number and Q is an order of a residue ring, the secret exponent part uniforming system 10, from a share ([[^{→}a]]^{P}, [[^{→}ρ]]^{Q}) of a floating point vector (^{→}a, ^{→}ρ) (provided that ^{→}a=(a₀, a₁, ..., aₘ₋₁), ^{→}ρ=(ρ₀, ρ₁, ..., ρₘ₋₁)), calculates a share ([[^{→}b]]^{P}, [[^{→}ρₘₐₓ]]^{Q}) of a floating point vector (^{→}b, ^{→}ρₘₐₓ) obtained by uniforming exponent parts of elements of the floating point vector (^{→}a, ^{→}ρ), (provided that ^{→}b=(b₀, b₁, ..., bₘ₋₁), ^{→}ρₘₐₓ=(ρₘₐₓ, ρₘₐₓ, ..., ρₘₐₓ) (provided that ρₘₐₓ=max{ρ₀, ρ₁, *...,* ρₘ₋₁}, |^{→}ρₘₐₓ|=m), 2^{ρ_i}aᵢ≒2^{ρ_max}bᵢ(0≦i<m) is satisfied). In the following the operation of the secret exponent part uniforming system 10 will be described with reference to Fig. 3.

In S110, the maximum value calculation means 110 calculates a share [[ρₘₐₓ]]^{Q} from the share [[^{→}ρ]]^{Q}. The maximum value calculation means 110 may be configured to execute, for example, maximum value calculation.

In S120, the difference calculation means 120 calculates a share [[^{→}ρ_{dif}]]^{Q}=[[^{→}ρ]]^{Q}-[[^{→}ρₘₐₓ]]^{Q} from the share [[^{→}ρ]]^{Q} and the share [[ρₘₐₓ]]^{Q} calculated in S110.

In S130, the mantissa part calculation means 130 calculates a share [[^{→}b]]^{P}=([[b₀]]^{P}, [[b₁]]^{P}, ..., [[bₘ₋₁]]^{P}) from the share [[^{→}a]]^{P} and the share [[^{→}ρ_{dif}]]^{Q}, for i which is satisfied 0≦i<m, by calculating a share [[bᵢ]]^{P} (provided that bᵢ=2^{-ρ_dif,i}aᵢ) of the number bᵢ which is obtained by -ρ_{dif,i} bit shift of the number aᵢ, from the i-th element [[aᵢ]]^{P} of the share [[^{→}a]]^{P} and the i-th element <<ρ_{dif,i}>>^{Q} of a share <<^{→}ρ_{dif}>>^{Q} converted by replicated secret sharing from the share [[^{→}ρ_{dif}]]^{Q}. The mantissa part calculating means 130 may be configured to execute, for example, shift amount concealment shift (part 2) or shift amount concealment shift (part 3).

In S140, the output unit 140 generates the share ([[^{→}b]]^{P}, [[^{→}ρₘₐₓ]]^{Q}) from the share [[^{→}b]]^{P} calculated in S130 and the share [[ρₘₐₓ]]^{Q} calculated in S110.

According to an embodiment of the present invention, it is possible to efficiently uniform the exponent part of the floating point while keeping confidentiality.

### <Second embodiment>

In the following, the secret sum calculation system 20 will be described with reference to Fig. 4 to Fig. 6. Fig. 4 is a block diagram showing a configuration of the secret sum calculation system 20. The secret sum calculation system 20 includes W pieces of secret sum calculation apparatuses 200₁, ..., 200_{W} (W is a prescribed integer of 3 to or more). The secret sum calculation apparatuses 200₁, ..., 200_{W} are connected to a network 800 and can communicate with each other. The network 800 may be, for example, a communication network such as the Internet or a broadcast communication path. Fig. 5 is a block diagram illustrating a configuration of the secret sum calculation apparatus 200ᵢ (1≦1≦W). Fig. 6 is a flowchart illustrating an operation of the secret sum calculation system 20.

As shown in Fig. 5, the secret sum calculation apparatus 200ᵢ includes an exponent part uniforming unit 210ᵢ, a sum calculation part 220ᵢ, and a recording part 290ᵢ. Each constituent unit of the secret sum calculation apparatus 200ᵢ excluding the recording part 290ᵢ is configured to execute an operation required for secure computation, that is, an operation required for realizing the function of each component part among protocols explained in <Technical background>. A specific functional configuration for realizing individual operations in the present invention is sufficient to be a configuration capable of executing the algorithms disclosed in each of the reference non-patent documents 1 to 5, for example, and since these are a conventional configuration, detailed description thereof will be omitted. The recording unit 290ᵢ is a component for properly recording information necessary for the processing of the secret sum calculation apparatus 200ᵢ.

By cooperative calculation by W secret sum calculation apparatuses 200₁, the secret sum calculation system 20 realizes secure computation of sum of a floating point vector being a multi-party protocol. Therefore, a exponent part uniforming means 210 (not shown) of the secret sum calculation system 20 is constituted of the exponent part uniforming units 210₁, ..., 210_{W}, and a sum calculation means 220 (not shown) is constituted of the sum calculation units 220₁, ..., 220_{W}.

It is assumed that P is a prime number and Q is an order of a residue ring, and the secret sum calculation system 20, from a share ([[^{→}a]]^{P}, [[^{→}ρ]]^{Q}) of a floating point vector (^{→}a, ^{→}ρ) (provided that ^{→}a=(a₀, a₁, *...,* aₘ₋₁), ^{→}ρ=(ρ₀, ρ₁, ..., ρₘ₋₁)), calculates a share ([[b]]^{P}, [[σ]]^{Q}) of a floating point vector (b, σ) which is the sum of floating points which are elements of the floating point vector (^{→}a, ^{→}ρ) (provided that Σ_{0≦i<m}2^{ρ_i}aᵢ≒2^{σ}b is satisfied). In the following, the operation of the secret sum calculation system 20 will be described with reference to Fig. 6.

In S210, the exponent part uniforming means 210, from a share ([[^{→}a]]^{P}, [[^{→}ρ]]^{Q}), calculates a share ([[^{→}a']]^{P}, [[^{→}ρₘₐₓ]]^{Q}) of a floating point vector (^{→}a', ^{→}ρₘₐₓ) obtained by uniforming exponent parts of the floating point vector (~a, ^{→}ρ) (provided that ^{→}a'=(a'₀, a'1, ***...,*** a'ₘ₋₁), ^{→}ρₘₐₓ=(ρₘₐₓ, ρₘₐₓ, ..., ρₘₐₓ) (provided that ρₘₐₓ=max{ρ₀, ρ₁, ..., ρₘ₋₁}, |^{→}ρₘₐₓ|=m), 2^{ρ_i}aᵢ≒2^{ρ_max} a'ᵢ(0≦i<m) is satisfied). It is sufficient that the exponent part uniforming means 210, for example, is constituted of each means included in the secret exponent part uniforming system 10 (that is, a maximum value calculation means 110, a difference calculation means 120, a mantissa part calculation means 130, and an output means 140). In this case, the exponent part uniforming unit 210ᵢ of the secret sum calculation apparatus 200ᵢ is configured to include a maximum value calculation unit 110ᵢ, a difference calculation unit 120ᵢ, a mantissa part calculation unit 130ᵢ, and an output unit 140ᵢ.

In S220, the sum calculation means 220 calculates the shares ([[b]]^{P}, [[σ]]^{Q}) from the shares ([[^{→}a']]^{P}, [[^{→}ρₘₐₓ]]^{Q}) calculated in S210 (provided that b=Σ_{0≦i<m}a'ᵢ, σ=ρₘₐₓ).

According to an embodiment of the present invention, the sum of floating points can be calculated efficiently by using secure computation for uniforming the exponent parts of floating points efficiently.

### <Third embodiment>

In the following, the secret product sum calculation system 30 will be described below with reference to Fig. 7 to Fig. 9. Fig. 7 is a block diagram showing a configuration of the secret product sum calculation system 30. The secret product sum calculation system 30 includes W pieces of secret product sum calculation apparatuses 300₁, ..., 300_{W} (W is a prescribed integer of 3 or more). The secret product sum calculation apparatuses 300₁, ..., 300_{W} are connected to a network 800 and can communicate with each other. The network 800 may be, for example, a communication network such as the Internet or a broadcast communication path. Fig. 8 is a block diagram illustrating a configuration of the secret product sum calculation apparatuses 300ᵢ. Fig. 9 is a flowchart illustrating an operation of the secret product sum calculation system 30.

As shown in Fig. 8, the secret product sum calculation apparatus 300ᵢ includes an exponent part uniforming unit 310ᵢ, a product sum calculation unit 320ᵢ, and a recording unit 390ᵢ. Each constituent part of the secret product sum calculation apparatus 300ᵢ excluding the recording part 390ᵢ is configured to execute an operation required for secure computation, that is, an operation required for realizing the function of each component part among protocols explained in <Technical background>. A specific functional configuration for realizing individual operations in the present invention is sufficient to be a configuration capable of executing the algorithms disclosed in each of the reference non-patent documents 1 to 5, for example, and since these are a conventional configuration, detailed description thereof will be omitted. The recording unit 390ᵢ is a component for properly recording information necessary for the processing of the secret product sum calculation apparatus 300ᵢ.

By cooperative calculation by W secret product sum calculation apparatuses 300ᵢ, the secret product sum calculation system 30 realizes secure computation of product sum of floating point vectors being a multi-party protocol. Therefore, an exponent part uniforming means 310 (not shown) of the secret product sum calculation system 30 is constituted of the exponent part uniforming units 310₁, ..., 310_{W}, and a product sum calculation means 320 (not shown) is constituted of the product sum calculation units 320₁, ..., 320_{W}.

It is assumed that P is a prime number and Q is an order of a residue ring, the secret product sum calculation system 30, from a share ([[^{→}a]]^{P}, [[^{→}ρ]]^{Q}) of a floating point vector (^{→}a, ^{→}ρ) (provided that ^{→}a=(a₀, a₁, ..., aₘ₋₁), ^{→}ρ=(ρ₀, ρ₁, ..., ρₘ₋₁)) and a share ([[^{→}b]]^{P}, [[^{→}σ]]^{Q}) (provided that ^{→}b=(b₀, b₁, ..., bₘ₋₁), ^{→}σ=(σ₀, σ₁, ..., σₘ₋₁)), calculates a share ([[c]]^{P}, [[τ]]^{Q}) of a floating point vector (c, τ) which is the product sum of floating points which are elements of the floating point vector (^{→}a, ^{→}ρ) and floating points which are elements of the floating point vector (^{→}b, ^{→}σ) (provided that Σ_{0≦i<m}2^{ρ_i+σ_i}aᵢbᵢ≒2^{τ}c is satisfied). In the following, the operation of the secret product sum calculation system 30 will be described with reference to Fig. 9.

In S310, the exponent part uniforming means 310, from the share ([[^{→}a]]^{P}, [[^{→}ρ]]^{Q}) and the share ([[^{→}b]]^{P}, [[^{→}σ]]^{Q}), calculates a share ([[^{→}a']]^{P}, [[^{→}ρₘₐₓ]]^{Q}) of a floating point vector (^{→}a', ^{→}ρₘₐₓ) obtained by uniforming exponent parts of the floating point vector (^{→}a, ^{→}ρ) (provided that ^{→}a'=(a'₀, a'₁, ..., a'ₘ₋₁), ^{→}ρₘₐₓ=(ρₘₐₓ, ρₘₐₓ, **...,** ρₘₐₓ) (provided that ρₘₐₓ=max{ρ₀, ρ₁, ..., ρₘ₋₁}, |^{→}ρₘₐₓ|=m), 2^{ρ_i}aᵢ≒2^{ρ_max} a'ᵢ(0≦i<m) is satisfied), and a share ([[^{→}b']]^{P}, [[^{→}σₘₐₓ]]^{Q}) of a floating point vector (^{→}b', ^{→}σₘₐₓ) obtained by uniforming exponent parts of the floating point vector (^{→}b, ^{→}σ) (provided that ^{→}b'=(b'₀, b'₁, ..., b'ₘ₋₁), ^{→}σₘₐₓ=(σₘₐₓ, σₘₐₓ, ..., σₘₐₓ) (provided that σₘₐₓ=max{σ₀, σ₁, ..., σₘ₋₁}, |^{→}σₘₐₓ|=m), 2^{σ_i}bᵢ≒2^{σ_max}b'ᵢ(0≦i<m) is satisfied). It is sufficient that the exponent part uniforming means 310, for example, is constituted of each means included in the secret exponent part uniforming system 10 (that is, a maximum value calculation means 110, a difference calculation means 120, a mantissa part calculation means 130, and an output means 140). In this case, the exponent part uniforming unit 310ᵢ of the secret product sum calculation apparatus 300ᵢ is configured to include a maximum value calculation unit 110ᵢ, a difference calculation unit 120ᵢ, a mantissa part calculation unit 130ᵢ, and an output unit 140ᵢ.

In S320, the product sum calculation unit 320, from the share ([[^{→}a']]^{P}, [[^{→}ρₘₐₓ]]^{Q}) calculated in S310 and the share ([[^{→}b']]^{P}, [[~σₘₐₓ]]^{Q}) calculated in S310, calculates the share ([[c]]^{P}, [[τ]]^{Q}) (provided that c=Σ_{0≦i<m}a'ᵢb'ᵢ, τ=ρₘₐₓ+σₘₐₓ).

According to an embodiment of the present invention, the product sum of the floating points can be calculated efficiently by using secure computation for uniforming the exponent parts of the floating points efficiently.

### <Supplementary Note>

Fig. 10 is a diagram showing an example of a functional configuration of a computer that realizes each apparatus described above. Processing performed in each apparatus described above can be implemented by causing a recording unit 2020 to read a program for causing the computer to function as each apparatus described above, and causing a control unit 2010, an input unit 2030, an output unit 2040, and the like to operate.

The apparatuses of the present invention includes, for example, as a single hardware entity, an input unit to which a keyboard or the like can be connected, an output unit to which a liquid crystal display or the like can be connected, a communication unit to which a communication apparatus (e.g., a communication cable) capable of communicating with the exterior of the hardware entity can be connected, a CPU (Central Processing Unit; may also include a cache memory, registers, etc.), a RAM or ROM serving as a memory, an external storage device, which is a hard disk, and a bus that connects the input unit, the output unit, the communication unit, the CPU, the RAM, the ROM, and the external storage device such that data can be exchanged there between. As needed, for hardware entity, an device (drive) which can read and write from or to a recording medium such as CD-ROM may be provided. A general-purpose computer or the like is an example of a physical entity including such hardware resources.

A program that is necessary to realize the above-described functions and data and the like that are necessary for processing of the program are stored in the external storage device of the hardware entity (the program does not necessarily have to be stored in the external storage device, and may be stored in, for example, the ROM, which is a read-only storage device). Data and the like that are obtained in the processing of the program are stored in the RAM, the external storage device or the like as appropriate.

In the hardware entity, each program stored in the external storage device (or ROM, etc.) and the data needed for processing of each program are loaded to the memory as needed, and the CPU interprets, executes, and processes them as appropriate. As a result, a CPU realizes a predetermined function (each constitution department that above, ... unit, ... means referred to).

The present invention is not limited to the embodiments described above, and can be modified appropriately. The processing steps described in the foregoing embodiments do not necessarily have to be executed chronologically in the described order, and may be executed in parallel or individually as necessary or according to the processing capacity of the apparatus that executes the processing.

As described above, in a case where processing functions of the hardware entity (the apparatus according to the present invention) described in the foregoing embodiments are realized by a computer, the processing contents of the functions that are to be included in the hardware entity are described by a program. The processing functions of the hardware entity described above are realized in the computer as a result of the program being executed by the computer.

The program that described this processing contents can be stored in the recording medium which is readable with a computer. For example, anything such as a magnetic recording device, an optical disk, a magneto-optical recording medium, semiconductor memory is enough for a readable recording medium with a computer. Specifically, for example, a hard disk device, a flexible disk, a magnetic tape, or the like can be used as a magnetic recording device, and a DVD (Digital Versatile Disc), a DVD-RAM (Random Access Memory), a CD-ROM (Compact Disc Read Only Memory), CD-R (Recordable)/RW (Rewritable), or the like can be used as an optical disk, an MO (Magneto-Optical disc) or the like can be used as magneto-optical recording medium, and an EEP-ROM (Electronically Erasable and Programmable-Read Only Memory) or the like can be used as a semiconductor memory.

In addition, the distribution of this program is carried out by, for example, selling, transferring, or lending a portable recording medium such as a DVD or a CD-ROM on which the program is recorded. Further, the program may be distributed by storing the program in a storage device of a server computer and transmitting the program from the server computer to other computers via a network.

A computer executing such a program is configured to, for example, first, temporarily store a program recorded on a portable recording medium or a program transferred from a server computer in its own storage device. When executing the processing, the computer reads the program stored in its own storage device, and executes the processing according to the read program. As another execution form of the program, the computer may directly read the program from the portable recording medium and execute processing according to the program, or each time a program is transferred from the server computer to the computer, processing according to the received program may be executed sequentially. In addition, by a so-called ASP (Application Service Provider) type service which does not transfer a program from the server computer to the computer and realizes a processing function only by the execution instruction and the result acquisition, the above-mentioned processing may be executed. It is assumed that the program in this embodiment includes data which is information to be provided for processing by the electronic computer and which is not a direct command to the computer conforming to the program but has a property to specify the processing of the computer.

According to this aspect, the computer is caused to execute a predetermined program to constitute the hardware entity, but at least part of the processing contents may be realized using hardware.

The above descriptions of the embodiments of the present invention are presented for the purpose of illustration and description. The descriptions are neither intended to be comprehensive nor to limit the present invention to the strict form disclosed. Modifications and variations can be made from the teachings described above. The embodiments were selected and described to provide the best illustration of the principle of the present invention such that those skilled in the art can use the present invention in various embodiments suitable for thoroughly considered practical use, and by adding various alterations.

## Claims

1. A secret exponent part uniforming system where P is a prime number, Q is an order of a residue ring, and [[x]]^{y} and <<x>>^{y} represent a share in which a mod y element x is performed by (k, n)-secret sharing and (k, n)-replicated secret sharing, respectively, where k is a threshold value of a secret sharing and n is a number of sharing of the secret sharing, the secret exponent part uniforming system which is comprised of three or more pieces of secret exponent part uniforming apparatuses and calculates, from a share ([[^{→}a]]^{P}, [[^{→}ρ]]^{Q}) of a floating point vector (^{→}a, ^{→}ρ), provided that ^{→}a=(a₀, a₁, ..., aₘ₋₁), ^{→}ρ=(ρ₀, ρ₁, ..., ρₘ₋₁), and the floating point vector (^{→}a, ^{→}ρ) represents m floating points 2^{ρ_0}a₀, 2^{ρ_1}a₁, ...,2^{ρ_m-1}aₘ₋₁, a share ([[^{→}b]]^{P}, [[^{→}ρₘₐₓ]]^{Q}) of a floating point vector (^{→}b, ^{→}ρₘₐₓ) obtained by uniforming exponent parts of the floating point vector (^{→}a, ^{→}ρ), provided that ^{→}b=(b₀, b₁, ..., bₘ₋₁), ^{→}ρₘₐₓ=(ρₘₐₓ, ρₘₐₓ, ..., ρₘₐₓ), ρₘₐₓ=max{ρ₀, ρ₁, ..., ρₘ₋₁}, |^{→}ρₘₐₓ|=m, the floating point vector (^{→}b, ^{→}ρₘₐₓ) represents m floating points 2^{ρ_max}b₀, 2^{ρ_max}b₁, ...,2^{ρ_max}bₘ₋₁, and 2^{ρ_i}aᵢ ≒ 2^{ρ_max}bᵢ, 0≦i<m is satisfied, the secret exponent part uniforming system comprising:
a maximum value calculation means (110) for calculating a share [[ρₘₐₓ]]^{Q} from the share [[^{→}ρ]]^{Q}, where ρₘₐₓ=max{ρ₀, ρ₁, ..., ρₘ₋₁} is satisfied;
a difference calculation means (120) for calculating a share [[^{→}ρ_{dif}]]^{Q}=[[^{→}ρ]]^{Q}-[[^{→}ρₘₐₓ]]^{Q} from the share [[^{→}ρ]]^{Q} and the share [[ρₘₐₓ]]^{Q};
a mantissa part calculation means (130) for calculating a share [[^{→}b]]^{P}=([[b₀]]^{P}, [[b₁]]^{P}, ..., [[bₘ₋₁]]^{P}) from the share [[^{→}a]]^{P} and the share [[^{→}ρ_{dif}]]^{Q}, for i which is satisfied 0≦i<m, by calculating a share [[bᵢ]]^{P}, provided that bᵢ=2^{-ρ_dif,i}aᵢ, of the number bᵢ which is obtained by -ρ_{dif,i} bit shift of the number aᵢ, from the i-th element [[aᵢ]]^{P} of the share [[^{→}a]]^{P} and the i-th element <<ρ_{dif,i}>>^{Q} of a share <<^{→}ρ_{dif}>>^{Q} converted by replicated secret sharing from the share [[^{→}ρ_{dif}]]^{Q}; and an output means (140) for generating the share ([[^{→}b]]^{P}, [[^{→}ρₘₐₓ]]^{Q}) from the share [[^{→}b]]^{P} and the share [[^{→}ρₘₐₓ]]^{Q},
wherein
the mantissa part calculation means (130), where p is a number of bits of the prime number P, M is an upper limit value which can be taken by the MSB position of numerical values to be inputted, M' is an upper limit value of the MSB position which is allowable by shares, and [R, R'] is a range of the right shift amount which is covered by a divided right shift, computes shares <<-ρ_{dif,i}>>^{Q} and <<-ρ_{dif,i}>>^{p} from the share <<ρ_{dif,i}>>^{Q};
computes shares [[f₀]] ²= [[(-ρ_{dif,i} ≥ -R')]]², [[f₁]]²= [[(-ρ_{dif,i} ≥ -R'+u)]]², ..., [[f_{d-1}]]²= [[(-ρ_{dif,i} ≥ -R'+(d-1)u]]², and [[f_{L}]]²= [[(-ρ_{dif,i} ≥ -R+1)]]² from the share <<-ρ_{dif,i}>>^{Q} or the share <<-ρ_{dif,i}>>^{p}, the range [R, R'], a numerical value u, and a numerical value d where u is an integer satisfying u ≤ M'-M+1 and d is an integer satisfying d ≥ ceiling(((R'-R+1)/u)_{Re}), where (x/y)_{Re} represents the value of real number division for two numbers x, y;
computes, by using mod 2 → mod p conversion, shares <<f₁>>^{p}, <<f₂>>^{p}, ..., <<f_{d-1}>>^{p}, <<f_{L}>>^{p} from the shares [[f₁]]², [[f₂]]², ..., [[f_{d-1}]]², [[f_{L}]]²;
computes a share <<-ρ_{dif,i}'>>^{p}= <<-ρ_{dif,i}>>^{p}+R' -u(Σ_{1≤i<d}<<fᵢ>>^{p}) + ((d-1)u-R')<<f_{L}>>^{p} from the share <<-ρ_{dif,i}>>^{p}, the shares <<f₁>>^{p}, <<f₂>>^{p}, ..., <<f_{d-1}>>^{p}, <<f_{L}>>^{p}, the upper limit value R' of the range, the numerical value u, and the numerical value d;
computes a share [[g]]^{p}= [[2^{-ρ dif,i'}aᵢ]]^{P} from the share [[aᵢ]]^{P} and the share <<-ρ_{dif,i}'>>^{p};
computes, by using bulk shift amount public right shift, shares [[c₀]]^{P}= [[2^{-ρ dif,i'}aᵢ/2^{R'}]]^{P}, [[c₁]]^{P}= [[2^{-ρ dif,i'}aᵢ/(2^{R'-u})]]^{P}, ..., [[c_{d-1}]]^{P}= [[2^{-ρ dif,i'}aᵢ/(2^{R'-(d-1)u})]]^{P} from the share [[g]]^{P}, the upper limit value R' of the range, the numerical value u, and the numerical value d;
computes, by using mod 2 → mod P conversion, shares [[f₀]]^{P}, [[f₁]]^{P}, ..., [[f_{d-1}]]^{P}, [[f_{L}]]^{P} from the shares [[f₀]]², [[f₁]]², ..., [[f_{d-1}]]², [[f_{L}]]²; and
computes the share [[bᵢ]] ^{P}= [[c₀]] ^{P}[[f₀]] ^{P}₊([[c₁]] ^{P}-[[c₀]]^{P})[[f₁]]^{P}+ ... +([[c_{d-1}]]^{P}-[[c_{d-2}]]^{P})[[f_{d-1}]]^{P}+([[g]]^{P}-[[c_{d-1}]]^{P})[[f_{L}]]^{P} from the share [[g]]^{P}, the shares [[c₀]]^{P}, [[c₁]]^{P}, ..., [[c_{d-1}]]^{P}, and the shares [[f₀]]^{P}, [[f₁]]^{P}, ..., [[f_{d-1}]]^{P}, [[f_{L}]]^{P}.

2. A secret exponent part uniforming apparatus in a secret exponent part uniforming system where P is a prime number, Q is an order of a residue ring, and [[x]]^{y} and <<x>>^{y} represent a share in which a mod y element x is performed by (k, n)-secret sharing and (k, n)-replicated secret sharing, respectively, where k is a threshold value of a secret sharing and n is a number of sharing of the secret sharing, the secret exponent part uniforming system which is comprised of three or more pieces of secret exponent uniforming apparatuses and calculates, from a share ([[^{→}a]]^{P}, [[^{→}ρ]]^{Q}) of a floating point vector (^{→}a, ^{→}ρ), provided that ^{→}a=(a₀, a₁, ..., aₘ₋₁), ^{→}ρ=(ρ₀, ρ₁, ..., ρₘ₋₁} , and the floating point vector (^{→}a, ^{→}ρ) represents m floating points 2^{ρ_0}a₀, 2^{ρ_1}a₁, ... , 2^{ρ_m-1}aₘ₋₁, a share ([[^{→}b]] ^{P}, [[^{→}ρₘₐₓ]]^{Q}) of a floating point vector (^{→}b, ^{→}ρₘₐₓ) which is obtained by uniforming exponent parts of the floating point vector (^{→}a, ^{→}ρ), provided that ^{→}b=(b₀, b₁, ..., bₘ₋₁), ^{→}ρₘₐₓ=(Pmax, ρₘₐₓ, ..., ρₘₐₓ), ρₘₐₓ=max{ρ₀, ρ₁, ..., ρₘ₋₁}, |^{→}ρₘₐₓ| =m, the floating point vector (^{→}b, ^{→}ρₘₐₓ) represents m floating points 2^{ρ_max}b₀, 2^{ρ_max}b₁, ... , 2^{ρ_max}bₘ₋₁, and 2^{ρ_i}aᵢ≒2^{ρ_max}bᵢ, 0≦i<m is satisfied, the secret exponent part uniforming apparatus comprising:
a maximum value calculation unit (110) which calculates a share [[ρₘₐₓ]]^{Q} from the share [[^{→}ρ]]^{Q}, where ρₘₐₓ=max{ρ₀, ρ₁, ..., ρₘ₋₁} is satisfied;
a difference calculation unit (120) which calculates a share [[^{→}ρ_{dif}]]^{Q}=[[^{→}ρ]]^{Q}-[[^{→}ρₘₐₓ]]^{Q} from the share [[^{→}ρ]]^{Q} and the share [[ρₘₐₓ]]^{Q};
a mantissa part calculation unit (130) which calculates a share [[^{→}b]]^{P}=([[b₀]]^{P}, [[b₁]] ^{P}, ..., [[bₘ₋₁]]^{P}) from the share [[^{→}a]]^{P} and the share [[^{→}ρ_{dif}]]^{Q}, for i which is satisfied 0≦5i<m, by calculating a share [[bᵢ]]^{P}, provided that bᵢ=2^{-ρ_dif,i}aᵢ, of the number bᵢ which is obtained by -ρ_{dif,i} bit shift of the number aᵢ, from the i-th element [[aᵢ]]^{P} of the share [[^{→}a]]^{P} and the i-th element <<ρ_{dif,i}>>^{Q} of a share <<^{→}ρ_{dif}>>^{Q} converted by replicated secret sharing from the share [[^{→}ρ_{dif}]]^{Q}; and an output unit (140) which generates the share ([[^{→}b]]^{P}, [[^{→}ρₘₐₓ]]^{Q}) from the share [[^{→}b]]^{P} and the share [[^{→}ρₘₐₓ]]^{Q},
wherein
the mantissa part calculation unit (130), where p is a number of bits of the prime number P, M is an upper limit value which can be taken by the MSB position of numerical values to be inputted, M' is an upper limit value of the MSB position which is allowable by shares, and [R, R'] is a range of the right shift amount which is covered by a divided right shift, computes shares <<-ρ_{dif,i}>>^{Q} and <<-ρ_{dif,i}>>^{p} from the share <<ρ_{dif,i}>>^{Q};
computes shares [[f₀]] ²= [[(-ρ_{dif,i} ≥ -R')]]², [[f₁]]²= [[(-ρ_{dif,i} ≥ -R'+u)]]², ..., [[f_{d-1}]]²= [[((-ρ_{dif,i} ≥ -R'+(d-1)u]]², and [[f_{L}]]²= [[(-ρ_{dif,i} ≥ -R+1)]]² from the share <<-ρ_{dif,i}>>^{Q} or the share <<-ρ_{dif,i}>>^{p}, the range [R, R'], a numerical value u, and a numerical value d where u is an integer satisfying u ≤ M'-M+1 and d is an integer satisfying d ≥ ceiling(((R'-R+1)/u)_{Re}), where (x/y)_{Re} represents the value of real number division for two numbers x, y;
computes, by using mod 2 → mod p conversion, shares <<f₁>>^{p}, <<f₂>>^{p}, ..., <<f_{d-1}>>^{p}, <<f_{L}>>^{p} from the shares [[f₁]]², [[f₂]]², ..., [[f_{d-1}]]², [[f_{L}]]²;
computes a share <<-ρ_{dif,i}'>>^{p}= <<-ρ_{dif,i}>>^{p}+R' -u(Σ_{1≤i<d}<<f₁>>^{p}) + ((d-1)u-R')<<f_{L}>>^{p} from the share <<-ρ_{dif,i}>>^{p}, the shares <<f₁>>^{p}, <<f₂>>^{p}, ..., <<f_{d-1}>>^{p}, <<f_{L}>>^{p}, the upper limit value R' of the range, the numerical value u, and the numerical value d;
computes a share [[g]]^{P}= [[2^{-ρ dif,i'}aᵢ]]^{P} from the share [[aᵢ]]^{P} and the share <<-ρ_{dif,i}'>>^{p};
computes, by using bulk shift amount public right shift, shares [[c₀]]^{P}= [[2^{-ρ dif,i'}aᵢ/2^{R'}]]^{P}, [[c₁]]^{P}= [[2^{-ρ dif,i'}aᵢ/(2^{R'-u})]]^{P}, ..., [[c_{d-1}]]^{P}= [[2^{-ρ dif,i'}aᵢ/(2^{R'-(d-1)u})]]^{P} from the share [[g]]^{P}, the upper limit value R' of the range, the numerical value u, and the numerical value d;
computes, by using mod 2 → mod P conversion, shares [[f₀]]^{P}, [[f₁]]^{P}, ..., [[f_{d-1}]]^{P}, [[f_{L}]]^{P} from the shares [[f₀]]², [[f₁]]², ..., [[f_{d-1}]]², [[f_{L}]]²; and
computes the share [[bᵢ]] ^{P}= [[c₀]]^{P}[[f₀]]^{P}+([[c₁]]^{P}-[[c₀]]^{P})[[f₁]]^{P}+ ... +([[c_{d-1}]]^{P}-[[c_{d-2}]]^{P})[[f_{d-1}]]^{P}+([[g]]^{P}-[[c_{d-1}]]^{P})[[f_{L}]]^{P} from the share [[g]]^{P}, the shares [[c₀]]^{P}, [[c₁]]^{P}, ..., [[c_{d-1}]]^{P}, and the shares [[f₀]]^{P}, [[f₁]]^{P}, ..., [[f_{d-1}]]^{P}, [[f_{L}]]^{P}.

3. A secret exponent part uniforming method where P is a prime number, Q is an order of a residue ring, and [[x]]^{y} and <<x>>^{y} represent a share in which a mod y element x is performed by (k, n)-secret sharing and (k, n)-replicated secret sharing, respectively, where k is a threshold value of a secret sharing and n is a number of sharing of the secret sharing, the secret exponent part uniforming method by which, from a share ([[^{→}a]] ^{P}, [[^{→}ρ]]^{Q}) of a floating point vector (^{→}a, ^{→}ρ), provided that ^{→}a=(a₀, a₁, ..., aₘ₋₁), ^{→}ρ=(ρ₀, ρ₁, ..., ρₘ₋₁), and the floating point vector (^{→}a, ^{→}ρ) represents m floating points 2^{ρ_0}a₀, 2^{ρ_1}a₁, ... , 2^{ρ_m-1}aₘ₋₁, a share ([[^{→}b]]^{P}, [[^{→}ρₘₐₓ]]^{Q}) of a floating point vector (^{→}b, ^{→}ρₘₐₓ) which is obtained by uniforming exponent parts of the floating point vector (^{→}a, ^{→}ρ), provided that ^{→}b= (b₀, b₁, ..., bₘ₋₁), ^{→}ρₘₐₓ= (ρₘₐₓ, ρₘₐₓ, ..., ρₘₐₓ), ρₘₐₓ=max{ρ₀, ρ₁, ..., ρₘ₋₁}, |^{→}ρₘₐₓ|=m, the floating point vector (^{→}b, ^{→}ρₘₐₓ) represents m floating points 2^{ρ_max}b₀, 2^{ρ_max}b₁, ...,2^{ρ_max}bₘ₋₁, and 2^{ρ_i}aᵢ≒2^{ρ_max}bᵢ, 0≦i<m is satisfied is calculated by using a secret exponent part uniforming system comprised of three or more pieces of secret exponent part uniforming apparatuses, the secret exponent part uniforming method comprising:
a maximum value calculation step (S110) in which the secret exponent part uniforming system calculates a share [[ρₘₐₓ]]^{Q} from the share [[^{→}ρ]]^{Q}, where ρₘₐₓ=max{ρ₀, ρ₁, ..., ρₘ₋₁} is satisfied;
a difference calculation step (S120) in which the secret exponent part uniforming system calculates a share [[^{→}ρ_{dif}]]^{Q}=[[^{→}ρ]]^{Q}-[[^{→}ρₘₐₓ]]^{Q} from the share [[^{→}ρ]]^{Q} and the share [[ρₘₐₓ]]^{Q};
a mantissa part calculation step (S130) in which the secret exponent part uniforming system calculates a share [[^{→}b]]^{P}=([[b₀]]^{P}, [[b₁]]^{P}, ..., [[bₘ₋₁]]^{P}) from the share [[^{→}a]]^{P} and the share [[^{→}ρ_{dif}]]^{Q}, for i which is satisfied 0≦i<m, by calculating a share [[bᵢ]]^{P}, provided that bᵢ=2^{-ρ_dif,i}aᵢ, of the number bᵢ which is obtained by -ρ_{dif,i} bit shift of the number aᵢ, from the i-th element [[aᵢ]]^{P} of the share [[^{→}a]]^{P} and the i-th element <<ρ_{dif,i}>>^{Q} of a share <<^{→}ρ_{dif}>>^{Q} converted by replicated secret sharing from the share [[^{→}ρ_{dif}]]^{Q}; and an output step (S140) in which the secret exponent part uniforming system generates the share ([[^{→}b]]^{P}, [[^{→}ρₘₐₓ]]^{Q}) from the share [[^{→}b]]^{P} and the share [[^{→}ρₘₐₓ]]^{Q},
wherein
the mantissa part calculation step (S130), where p is a number of bits of the prime number P, M is an upper limit value which can be taken by the MSB position of numerical values to be inputted, M' is an upper limit value of the MSB position which is allowable by shares, and [R, R'] is a range of the right shift amount which is covered by a divided right shift, includes
a step of computing shares <<-ρ_{dif,i}>>^{Q} and <<-ρ_{dif,i}>>^{p} from the share <<ρ_{dif,i}>>^{Q};
a step of computing shares [[f₀]]²= [[(-ρ_{dif,i} ≥ -R')]]², [[f₁]]²= [[(-ρ_{dif,i} ≥ -R'+u)]]², ..., [[f_{d-1}]] ²= [[(-ρ_{dif,i} ≥ -R'+ (d-1)u]]², and [[f_{L}]]²= [[(-ρ_{dif,i} ≥ -R+1)]] ² from the share <<-ρ_{dif,i}>>^{Q} or the share <<-ρ_{dif,i}>>^{P}, the range [R, R'], a numerical value u, and a numerical value d where u is an integer satisfying u ≤ M'-M+1 and d is an integer satisfying d ≥ ceiling(((R'-R+1)/u)_{Re}), where (x/y)_{Re} represents the value of real number division for two numbers x, y;
a step of computing, by using mod 2 → mod p conversion, shares <<f₁>>^{p}, <<f₂>>^{p}, ..., <<f_{d-1}>>^{p}, <<f_{L}>>^{p} from the shares [[f₁]]², [[f₂]]², ..., [[f_{d-1}]]², [[f_{L}]]²;
a step of computing a share <<-ρ_{dif,i}'>>^{p}= <<-ρ_{dif,i}>>^{p}+R'-
u(Σ_{1≤i<d}<<fᵢ>>^{p})+((d-1)u-R')<<f_{L}>>^{p} from the share <<-ρ_{dif,i}>>^{p}, the shares <<f₁>>^{p}, <<f₂>>^{p}, ..., <<f_{d-1}>>^{p}, <<f_{L}>>^{p}, the upper limit value R' of the range, the numerical value u, and the numerical value d;
a step of computing a share [[g]]^{P}= [[2^{-ρ dif,i'}aᵢ]]^{P} from the share [[aᵢ]]^{P} and the share <<-ρ_{dif,i}'>>^{p};
a step of computing, by using bulk shift amount public right shift, shares [[c₀]]^{P}= [[2^{-ρ dif,i'}aᵢ/2^{R'}]]^{P}, [[c₁]]^{P}= [[2^{-ρ dif,i'}aᵢ/(2^{R'-u})]]^{P}, ..., [[c_{d-1}]]^{P}= [[2^{-ρ dif,i'}aᵢ/(2^{R'-(d-1)u})]]^{P} from the share [[g]]^{P}, the upper limit value R' of the range, the numerical value u, and the numerical value d;
a step of computing, by using mod 2 → mod P conversion, shares [[f₀]]^{P}, [[f₁]]^{P}, ..., [[f_{d-1}]]^{P}, [[f_{L}]]^{P} from the shares [[f₀]]², [[f₁]]², ..., [[f_{d-1}]]², [[f_{L}]]²; and
a step of computing the share [[bᵢ]]^{P}= [[c₀]]^{P}[[f₀]]^{P}+([[c₁]]^{P}-[[c₀]]^{P})[[f₁]]^{P}+... +([[c_{d-1}]]^{P}-[[c_{d-2}]]^{P})[[f_{d-1}]]^{P}+([[g]]^{P}- [[C_{d-1}]]^{P})[[f_{L}]]^{P} from the share [[g]]^{P}, the shares [[c₀]]^{P}, [[c₁]]^{P}, ..., [[c_{d-1}]]^{P}, and the shares [[f₀]]^{P}, [[f₁]]^{P}, ..., [[f_{d-1}]]^{P}, [[f_{L}]]^{P}.

4. A secret sum calculation system where P is a prime number, Q is an order of a residue ring, and [[x]]^{y} and <<x>>^{y} represent a share in which a mod y element x is performed by (k, n)-secret sharing and (k, n) -replicated secret sharing, respectively, where k is a threshold value of a secret sharing and n is a number of sharing of the secret sharing, the secret sum calculation system which is comprised of three or more pieces of secret sum calculation apparatuses and calculates, from a share ([[^{→}a]]^{P}, [[^{→}ρ]]^{Q}) of a floating point vector (^{→}a, ^{→}ρ), provided that ^{→}a=(a₀, a₁, ..., aₘ₋₁), ^{→}ρ=(ρ₀, ρ₁, ..., ρₘ₋₁), and the floating point vector (^{→}a, ^{→}ρ) represents m floating points 2^{ρ_0}a0, 2^{ρ_1}a₁, ..., 2^{ρ_m-1}aₘ₋₁, a share ([[b]]^{P}, [[σ]]^{Q}) of a floating point (b, σ) which is sum of floating points which are elements of the floating point vector (^{→}a, ^{→}ρ), provided that the floating point (b, σ) represents a floating point 2^{σ}b and Σ_{0≤i<m}2^{ρ_i}aᵢ≒2^{σ}b is satisfied, the secret sum calculation system comprising:
an exponent part uniforming means (210) which calculates, from the share ([[^{→}a]]^{P}, [[^{→}ρ]]^{Q}), a share ([[^{→}a']]^{P}, [[^{→}ρₘₐₓ]]^{Q}) of a floating point vector (^{→}a', ^{→}ρₘₐₓ) that is obtained by uniforming exponent parts of the floating point vector (^{→}a, ^{→}ρ), provided that ^{→}a'=(a'₀, a'₁, ..., a'ₘ₋₁), ^{→}ρₘₐₓ=(ρₘₐₓ, ρₘₐₓ, ..., ρₘₐₓ), ρₘₐₓ=max{ρ₀, ρ₁, ..., ρₘ₋₁}, |^{→}ρₘₐₓ| =m, the floating point vector (^{→}a', ^{→}ρₘₐₓ) represents m floating points 2^{ρ_max}a'₀, 2^{ρ_max}ₐ'₁, ..., 2^{ρ_max}a'ₘ₋₁, and 2^{ρ_i}aᵢ≒2^{ρ_max} a'ᵢ, 0≦i<m is satisfied; a sum calculation means (220) which calculates the share ([[b]]^{P}, [[σ]]^{Q}) from the share ([[^{→}a']]^{P}, [[^{→}ρₘₐₓ]]^{Q}), by calculating [[b]]=[[Σ_{0≦i<m}a'ᵢ]] and [[σ]]=[[ρₘₐₓ]]; and the exponent part uniforming means (210) is configured by using each means included in the secret exponent part uniforming system according to claim 1 and calculates the share ([[^{→}a']]^{P}, [[^{→}ρₘₐₓ]]^{Q}) from the share ([[^{→}a]]^{P}, [[^{→}ρ]]^{Q}).

5. A secret product sum calculation system where P is a prime number, Q is an order of a residue ring, and [[x]]^{y} and <<x>>^{y} represent a share in which a mod y element x is performed by (k, n)-secret sharing and (k, n)-replicated secret sharing, respectively, where k is a threshold value of a secret sharing and n is a number of sharing of the secret sharing, the secret product sum calculation system which is comprised of three or more pieces of secret product sum calculation apparatuses and calculates, from a share ([[^{→}a]]^{P}, [[^{→}ρ]]^{Q}) of a floating point vector (^{→}a, ^{→}ρ), provided that ^{→}a=(a₀, a₁, ..., aₘ₋₁), ^{→}ρ=(ρ₀, ρ₁, ..., ρₘ₋₁), and the floating point vector (^{→}a, ^{→}ρ) represents m floating points 2^{ρ_0}a₀, 2^{ρ_1}a₁, ..., 2^{ρ_m-1}aₘ₋₁ and a share ([[^{→}b]] ^{P}, [[^{→}σ]]^{Q}) of a floating point vector (^{→}b, ^{→}σ), provided that ^{→}b=(b₀, b₁, ..., bₘ₋₁), ^{→}σ=(σ₀, σ₁, ..., σₘ₋₁) and the floating point vector (^{→}b, ^{→}σ) represents m floating points 2^{σ_0}b0, 2^{σ_1}b₁, ..., 2^{σ_m-1}bₘ₋₁, a share ([[c]] ^{P}, [[τ]]^{Q}) of a floating point (c, τ) which is a product sum of floating points of elements of the floating point vector (^{→}a, ^{→}ρ) and floating points of elements of the floating point vector (^{→}b, ^{→}σ), provided that the floating point (c, τ) represents a floating point 2^{τ}c and Σ_{0≦i<m}2^{ρ_i+σ_i}aᵢbᵢ≒2^{τ}c is satisfied, the secret product sum calculation system comprising:
an exponent part uniforming means (310) which, from the share ([[^{→}a]]^{P}, [[^{→}ρ]]^{Q}) and the share ([[^{→}b]]^{P}, [[^{→}σ]]^{Q}), calculates a share ([[^{→}a']]^{P}, [[^{→}ρₘₐₓ]]^{Q}) of a floating point vector (^{→}a', ^{→}ρₘₐₓ) which is obtained by uniforming exponent parts of the floating point vector (^{→}a, ^{→}ρ), provided that ^{→}a'=(a'₀, a'₁, ..., a'ₘ₋₁), ^{→}ρₘₐₓ=(ρₘₐₓ, ρₘₐₓ, ..., ρₘₐₓ), ρₘₐₓ=max{ρ₀, ρ₁, ..., ρₘ₋₁}, |^{→}ρₘₐₓ|=m, the floating point vector (^{→}a', ^{→}ρₘₐₓ) represents m floating points 2^{ρ_max}a'₀, 2^{ρ_max}a'₁, ..., 2^{ρ_max}a'ₘ₋₁, and 2^{ρ_i}aᵢ≒2^{ρ_max} a'ᵢ 0≦i<m is satisfied, and a share ([[^{→}b']]^{P}, [[^{→}σₘₐₓ]]^{Q}) of a floating point vector (^{→}b', ^{→}σₘₐₓ) which is obtained by uniforming exponent parts of the floating point vector (^{→}b, ^{→}σ), provided that ^{→}b'=(b'₀, b'₁, ..., b'ₘ₋₁), ^{→}σₘₐₓ=(σₘₐₓ, σₘₐₓ, ..., σₘₐₓ), σₘₐₓ=max{σ₀, σ₁ ..., σₘ₋₁}, |^{→}σₘₐₓ| =m, the floating point vector (^{→}b', ^{→}σₘₐₓ) represents m floating points 2^{σ_max}b'_{0,} 2^{σ_max}b'₁, ..., 2^{σ_max}b'ₘ₋₁, and 2^{σ_i}bᵢ≒2^{σ_max}b'ᵢ, 0≦i<m is satisfied;
a product sum calculation means (320) which calculates the share ([[c]]^{P}, [[τ]]^{Q}) from the share ([[^{→}a']]^{P}, [[^{→}ρₘₐₓ]]^{Q}) and the share ([[^{→}b']]^{P}, [[^{→}σₘₐₓ]]^{Q}), by calculating [[c]] = [[Σ_{0≦ i<m}a'ᵢb'ᵢ]] and [[τ]] = [[ρₘₐₓ+σₘₐₓ]]; and
the exponent part uniforming means (310) is configured by using each means included in the secret exponent part uniforming system according to claim 1 and calculates the share (E[[^{→}a']]^{P}, [[^{→}ρₘₐₓ]]^{Q}) and the share ([[^{→}b']]^{P}, [[^{→}σₘₐₓ]]^{Q}) from the share ([[^{→}a]]^{P}, [[^{→}ρ]]^{Q}) and the share ([[^{→}b]]^{P} [[^{→}σ]]^{Q}), respectively.

6. A program for causing a computer to function as the secret exponent part uniforming apparatus according to claim 2.

## Patentansprüche

1. System zum Vereinheitlichen eines geheimen Exponententeils, wobei P eine Primzahl ist, Q eine Ordnung eines Restrings ist und [[x]]^{y} und <<x>>^{y} einen Anteil darstellen, in dem ein mod-y-Element x durch (k, n)-Geheimnisteilung bzw. (k, n)-replizierte Geheimnisteilung durchgeführt wird, wobei k ein Schwellenwert einer Geheimnisteilung ist und n eine Anzahl von Teilen der Geheimnisteilung ist, wobei das System zum Vereinheitlichen eines geheimen Exponententeils drei Stück oder mehr von Vorrichtungen zum Vereinheitlichen eines geheimen Exponententeils aufweist und aus einem Anteil ([[^{→}a]]^{P}, [[^{→}ρ]]^{Q}) eines Gleitkommavektors (^{→}a, ^{→}ρ), vorausgesetzt, dass ^{→}a=(a₀, a₁, ..., aₘ₋₁), ^{→}ρ=(p₀, ρ₁, ..., ρₘ₋₁) und der Gleitkommavektor (^{→}a, ^{→}ρ) m Gleitkommas 2^{ρ_0}a₀, 2^{ρ_1}a₁, ..., 2^{ρ_m-1}aₘ₋₁ darstellt, einen Anteil ([[^{→}b]]^{P}, [[^{→}ρₘₐₓ]]^{Q}) eines Gleitkommavektors (^{→}b, ^{→}ρₘₐₓ), der durch Vereinheitlichen von Exponententeilen des Gleitkommavektors (^{→}a, ^{→}ρ) erhalten wird, vorausgesetzt, dass ^{→}b= (b₀, b₁*,* ..., bₘ₋₁), ^{→}ρₘₐₓ=(ρₘₐₓ, ρₘₐₓ, ..., ρₘₐₓ)*,* ρₘₐₓ=max{ρ₀, ρ₁, ..., ρₘ₋₁}, |^{→}ρₘₐₓ|=m, der Gleitkommavektor (^{→}b, ^{→}ρₘₐₓ) m Gleitkommas 2^{ρ_max}b₀, 2^{ρ_max}b₁, ..., 2^{ρ_max}bₘ₋₁ darstellt und 2^{ρ_i}aᵢ≒2^{ρ_max}b_{i,} 0≦i<m erfüllt ist, wobei das System zum Vereinheitlichen eines geheimen Exponententeils Folgendes aufweist:
eine Maximalwertberechnungseinrichtung (110) zum Berechnen eines Anteils [[ρₘₐₓ]]^{Q} aus dem Anteil [[^{→}ρ]]^{Q}, wobei ρₘₐₓ=max{ρ_{0,} ρ₁, ..., ρₘ₋₁} erfüllt ist;
eine Differenzberechnungseinrichtung (120) zum Berechnen eines Anteils [[^{→}ρ_{dif}]]^{Q}=[[^{→}ρ]]^{Q}-[[^{→}ρₘₐₓ]]^{Q} aus dem Anteil [[^{→}ρ]]^{Q} und dem Anteil [[ρₘₐₓ]]^{Q};
eine Mantissenteilberechnungseinrichtung (130) zum Berechnen eines Anteils [[^{→}b]]^{P}=([[b₀]]^{P}, [[b₁]]^{P}, ..., [[bₘ₋₁]]^{P}) aus dem Anteil [[^{→}a]]^{P} und dem Anteil [[^{→}ρ_{dif}]]^{Q}, für i, das 0≦i<m erfüllt ist, durch Berechnen eines Anteils [[bᵢ]]^{P} vorausgesetzt, dass bᵢ=2^{-ρ_diff,i}aᵢ, der Zahl bᵢ, die durch -ρ_{dif,i}-Bitverschiebung der Zahl aᵢ erhalten wird, aus dem i-ten Element [[aᵢ]]^{P} des Anteils [[^{→}a]]^{P} und dem i-ten Element <<ρ_{dif,i}>>^{Q} eines Anteils <<^{→}ρ_{dif}>>^{Q}, der durch replizierte Geheimnisteilung aus dem Anteil [[^{→}ρ_{dif}]]^{Q} umgewandelt wird; und
eine Ausgabeeinrichtung (140) zum Erzeugen des Anteils ([[^{→}b]]^{P}, [[ρₘₐₓ]]^{Q}) aus dem Anteil [[^{→}b]]^{P} und dem Anteil [[^{→}ρₘₐₓ]]^{Q},
wobei
die Mantissenteilberechnungseinrichtung (130), wobei p eine Anzahl von Bits der Primzahl P ist, M ein oberer Grenzwert ist, der durch die MSB-Position von einzugebenden numerischen Werten angenommen werden kann, M' ein oberer Grenzwert der MSB-Position ist, der durch Anteile zulässig ist, und [R, R'] ein Bereich des Rechtsverschiebungsbetrags ist, der durch eine geteilte Rechtsverschiebung abgedeckt ist,
Anteile <<-ρ_{dif,i}>>^{Q} und <<-ρ_{dif,i}>>^{p} aus dem Anteil <<ρ_{dif,i}>>^{Q} berechnet;
Anteile [[f₀]]²=[[(-p_{dif,i} ≥ -R')]]², [[f₁]]²=[[(-ρ_{dif, i} ≥ -R'+u)]]², ..., [[f_{d-1}]]²=[[(-ρ_{dif,i} ≥ -R'+(d-1)u]]² und [[f_{L}]]²=[[(-ρ_{dif,i} ≥ -R+1)]]² aus dem Anteil <<-ρ_{dif, i}>>^{Q} oder dem Anteil <<-ρ_{dif,i}>>^{p}, dem Bereich [R, R'], einem numerischen Wert u und einem numerischen Wert d berechnet, wobei u eine ganze Zahl ist, die u ≤ M'-M+1 erfüllt, und d eine ganze Zahl ist, die d ≥ ceiling(((R' -R+1)/u)_{Re}) erfüllt, wobei (x/y)_{Re} den Wert der reellen Zahlenteilung für zwei Zahlen x, y darstellt;
unter Verwendung von "mod 2 → mod p"-Umwandlung Anteile <<f₁>>^{p}, <<f₂>>^{p}, ..., <<f_{d-1}>>^{p}, <<f_{L}>>^{p} aus den Anteilen [[f₁]]², [[f₂]]², ..., [[f_{d-1}]]², [[f_{L}]]² berechnet; einen Anteil <<-ρ_{dif,i}' >>^{p}= <<-ρ_{dif,i}>>^{p}+R'-u(∑_{1≤i<d}<<f >>^{p}) + ((d-1)u-R')<<f_{L}>>^{p} aus dem Anteil <<-ρ_{dif,i}>>^{p}, den Anteilen <<f₁>>^{p}*,* <<f₂>>^{p}, ..., <<f_{d-1}>>^{p}, <<f_{L}>>^{p}, dem oberen Grenzwert R' des Bereichs, dem numerischen Wert u und dem numerischen Wert d berechnet;
einen Anteil [[g]] ^{P}= [[2^{-ρ dif,i-}aᵢ]]^{P} aus dem Anteil [[aᵢ]]^{P} und dem Anteil <<-ρ_{dif,i}>>^{p} berechnet;
unter Verwendung von öffentlicher Rechtsverschiebung von Massenverschiebungsbetrag ("bulk shift amount public right shift") Anteile [[c₀]] ^{P}= [[2^{-ρ dif,i}'aᵢ/2^{R'}]]^{P} [[c₁]] ^{P}= [[2^{-ρ dif,i}aᵢ/(2^{R'-u})]]^{P}, ..., [[C_{d- 1}]]^{P}=[[2^{-ρ dif,i}'ai/(2^{R'-(d-1)u})]]^{P} aus dem Anteil [[g]]^{P}, dem oberen Grenzwert R' des Bereichs, dem numerischen Wert u und dem numerischen Wert d berechnet;
unter Verwendung von "mod 2 → mod P"-Umwandlung Anteile [[f₀]]^{P} [f₁]]^{P}, ..., [[f_{d-1}]]^{P}, [[f_{L}]] aus den Anteilen [[f₀]]², [[f₁]]², ..., [[f_{d-1}]]², [[f_{L}]]² berechnet; und
den Anteil [[bi]]^{P}= [[c₀]]^{P}[[f₀]]^{P}+ ([[c₁]]^{P}-[[C₀]]^{P})[[f₁]] ^{P}+ ... + ([[C_{d-1}]]^{P}- [[C_{d-2}]]^{P})[[f_{d-1}]]^{P}+ ([[g]]^{P}-[[C_{d-1}]]^{P})[[f_{L}]]^{P} aus dem Anteil [[g]]^{P}, den Anteilen [[c₀]]^{P}, [[c₁]] P, ..., [[c_{d-1}]^{P} und den Anteilen [[f₀]]^{P}, [[f₁]]^{P}, ..., [[f_{d-1}]] ^{P}, [[f_{L}]]^{P} berechnet.

2. Vorrichtung zum Vereinheitlichen eines geheimen Exponententeils in einem System zum Vereinheitlichen eines geheimen Exponententeils, wobei P eine Primzahl ist, Q eine Ordnung eines Restrings ist und [[x]]^{y} und <<x>>^{y} einen Anteil darstellen, in dem ein mod-y-Element x durch (k, n)-Geheimnisteilung bzw. (k, n)-replizierte Geheimnisteilung durchgeführt wird, wobei k ein Schwellenwert einer Geheimnisteilung ist und n eine Anzahl von Teilen der Geheimnisteilung ist, wobei das System zum Vereinheitlichen eines geheimen Exponententeils drei Stück oder mehr von Vorrichtungen zum Vereinheitlichen eines geheimen Exponententeils aufweist und aus einem Anteil ([[^{→}a]]^{P}, [[^{→}ρ]]^{Q}) eines Gleitkommavektors (^{→}a, ^{→}ρ), vorausgesetzt, dass →a=(a₀, a₁, ..., aₘ₋₁) , →ρ=(ρ₀, ρ₁, ..., ρₘ₋₁) und der Gleitkommavektor (^{→}a, ^{→}ρ) m Gleitkommas 2^{ρ_0}a₀, 2^{ρ_1}a₁, ..., 2^{ρ_m-1}aₘ₋₁ darstellt, einen Anteil ([[^{→}b]] ^{P}, [[^{→}ρₘₐₓ]]^{Q}) eines Gleitkommavektors (^{→}b, ^{→}ρmax), der durch Vereinheitlichen von Exponententeilen des Gleitkommavektors (^{→}a, ^{→}ρ) erhalten wird, vorausgesetzt, dass ^{→}b=(b₀, b₁*,* ..., bₘ₋₁)*,* ^{→}ρₘₐₓ= (ρₘₐₓ, ρₘₐₓ, ..., ρₘₐₓ)*,* ρₘₐₓ=max{ρ₀, ρ₁, ... , ρₘ₋₁}, |^{→}ρₘₐₓ|=m, der Gleitkommavektor (^{→}b, ^{→}ρₘₐₓ) m Gleitkommas 2^{ρ_max}b₀, 2^{ρ_max}b₁, ..., 2^{ρ_max}bₘ₋₁ darstellt und 2^{ρ_i}aᵢ≒2^{ρ_max}bᵢ, 0≦i<m, erfüllt ist, wobei die Vorrichtung zum Vereinheitlichen eines geheimen Exponententeils Folgendes aufweist:
eine Maximalwertberechnungseinheit (110), die einen Anteil [[ρₘₐₓ]]^{Q} aus dem Anteil [[→ρ]]^{Q} berechnet, wobei ρₘₐₓ=max{ρ₀, ρ₁, ..., ρₘ₋₁} erfüllt ist;
eine Differenzberechnungseinheit (120), die einen Anteil [[^{→}ρ_{dif}]]^{Q}=[[^{→}ρ]]^{Q}- [[^{→}ρₘₐₓ]]^{Q} aus dem Anteil [[^{→}ρ]]^{Q} und dem Anteil [[ρₘₐₓ]]^{Q} berechnet;
eine Mantissenteilberechnungseinheit (130), die einen Anteil [[^{→}b]]^{P}=([[b₀]]^{P}, [[b₁]]^{P},..., [[bₘ₋₁]]^{P}) aus dem Anteil [[^{→}a]]^{P} und dem Anteil [[^{→}ρ_{dif}]]^{Q}, für i, das 0≦i<m erfüllt ist, durch Berechnen eines Anteils [[bᵢ]]^{P}, vorausgesetzt, dass bᵢ=2^{-ρ_dif ^{,i}}aᵢ, der Zahl bi, die durch - ρ_{dif,i}-Bitverschiebung der Zahl ai erhalten wird, aus dem i-ten Element [[aᵢ]]^{P} des Anteils [[→a]]^{P} und dem i-ten Element <<ρ_{dif,i}>>^{Q} eines Anteils <<^{→}ρ_{dif}>>^{Q}, der durch replizierte Geheimnisteilung aus dem Anteil [[^{→}ρ_{dif}]]^{Q} umgewandelt wird; und
eine Ausgabeeinheit (140), die den Anteil ([[^{→}b]]^{P} [[^{→}ρₘₐₓ]]^{Q})aus dem Anteil [[^{→}b]]^{P} und dem Anteil [[^{→}ρₘₐₓ]]^{Q} erzeugt,
wobei
die Mantissenteilberechnungseinheit (130), wobei p eine Anzahl von Bits der Primzahl P ist, M ein oberer Grenzwert ist, der durch die MSB-Position von einzugebenden numerischen Werten angenommen werden kann, M' ein oberer Grenzwert der MSB-Position ist, der durch Anteile zulässig ist, und [R, R'] ein Bereich des Rechtsverschiebungsbetrags ist, der durch eine geteilte Rechtsverschiebung abgedeckt ist,
Anteile <<-ρ_{dif,i}>>^{Q} und <<-ρ_{dif,i}>>^{p} aus dem Anteil <<ρ_{diff,i}>>^{Q} berechnet;
Anteile [[f₀]]²=[[(-p_{dif,i} ≥ -R')]]², [[f₁]]²=[[(-ρ_{dif,i} ≥ -R'+u)]]², ..., [[f_{d-1}]]²=[[(-ρ_{diff,i} ≥ -R'+(d-1)u]]² und [[f_{L}]]²=[[(-ρ_{dif,i} ≥ -R+1)]]² aus dem Anteil <<-ρ_{dif,i}>>^{Q} oder dem Anteil <<-ρ_{dif,i}>>^{p}, dem Bereich [R, R'], einem numerischen Wert u und einem numerischen Wert d berechnet, wobei u eine ganze Zahl ist, die u ≤ M'-M+1 erfüllt, und d eine ganze Zahl ist, die d ≥ ceiling(((R'-R+1)/u)_{Re}) erfüllt, wobei (x/y)_{Re} den Wert der reellen Zahlenteilung für zwei Zahlen x, y darstellt;
unter Verwendung von "mod 2 → mod p"-Umwandlung Anteile <<f₁>>^{p}, <<f₂>>^{p}, ..., <<f_{d-1}>>^{p}, <<f_{L}>>^{p} aus den Anteilen [[f₁]]², [[f₂]]², ..., [[f_{d-1}]]², berechnet; einen Anteil <<-ρ_{diff,i}' >>^{p}= <<-ρ_{dif,i}>>^{p}+R' -u (Σ_{1≤i<d}<<f>>^{p}) + ((d-1)u-R')<<f_{L}>>^{p} aus dem Anteil <<-ρ_{diff,i}>>^{p}, den Anteilen <<f₁>>^{p}, <<f₂>>^{p}, ..., <<f_{d-1}>>^{p}, <<f_{L}>>^{p}, dem oberen Grenzwert R' des Bereichs, dem numerischen Wert u und dem numerischen Wert d berechnet;
einen Anteil [[g]] ^{P}= [[2^{-ρ dif,i'}aᵢ]^{P} aus dem Anteil [[aᵢ]]^{P} und dem Anteil <<-ρ_{dif,i} '>>^{p} berechnet;
unter Verwendung von öffentlicher Rechtsverschiebung von Massenverschiebungsbetrag ("bulk shift amount public right shift") Anteile [[c₀]]^{P}= [[2^{-ρ dif,i'}aᵢ/2^{R'}]]]^{P}, [[c₁]]^{P}= [[2^{-ρ dif,i'}aᵢ/(2^{R'-u})]]^{P}, ..., [[c_{d-1}]]^{P}=[[2^{-ρ dif,i'}aᵢ/(2^{R'-(d-1)u})]]^{P} aus dem Anteil [[g]]^{P}, dem oberen Grenzwert R' des Bereichs, dem numerischen Wert u und dem numerischen Wert d berechnet;
unter Verwendung von "mod 2 → mod P"-Umwandlung Anteile [[f₀]]^{P}, [[f₁]]^{P}, ..., [[f_{d-1}]]^{P}, [[f_{L}]^{P} aus den Anteilen [[f₀]]², [[f₁]]², ..., [[f_{d-1}]]², [[f_{L}]]² berechnet; und
den Anteil [[bᵢ]]^{P}=[[c₀]]^{P}[[f₀]]^{P}+([[c₁]]^{P}-[[c₀]]^{P})[[f₁]]^{P}+ ... + ([[C_{d-1}]]^{P}-[[c_{d-2}]]^{P})[[f_{d-1}]]^{P}+([[g]]^{P}-[[C_{d-1}]]^{P})[[f_{L}]]^{P} aus dem Anteil [[g]]^{P}, den Anteilen [[c₀]]^{P}, [[c₁₁]]^{P}, ..., [[c_{d-1}]]^{P} und den Anteilen [[f₀]]^{P}, [[f₁]]^{P}, ..., [[f_{d-1}]]^{P}, [[f_{L}]]^{P} berechnet.

3. Verfahren zum Vereinheitlichen eines geheimen Exponententeils, wobei P eine Primzahl ist, Q eine Ordnung eines Restrings ist und [[x]]^{y} und <<x>>^{y} einen Anteil darstellen, in dem ein mod-y-Element x durch (k, n)-Geheimnisteilung bzw. (k, n)-replizierte Geheimnisteilung durchgeführt wird, wobei k ein Schwellenwert einer Geheimnisteilung ist und n eine Anzahl von Teilen der Geheimnisteilung ist, wobei das Verfahren zum Vereinheitlichen eines geheimen Exponententeils, durch das aus einem Anteil ([[^{→}a]]^{P}, [[^{→}ρ]]^{Q}) eines Gleitkommavektors (^{→}a, ^{→}ρ), vorausgesetzt, dass ^{→}a=(a₀, a₁, ..., aₘ₋₁) , ^{→}ρ=(ρ₀, ρ₁, ..., ρₘ₋₁) und der Gleitkommavektor (^{→}a, ^{→}ρ) m Gleitkommas 2^{ρ_0}a₀, 2^{ρ_1}a₁, ..., 2^{ρ_m-1}aₘ₋₁ darstellt, einen Anteil ([[^{→}b]]^{P}, [[^{→}ρₘₐₓ]]^{Q}) eines Gleitkommavektors (^{→}b, ^{→}ρₘₐₓ), der durch Vereinheitlichen von Exponententeilen des Gleitkommavektors (^{→}a, ^{→}ρ) erhalten wird, vorausgesetzt, dass ^{→}b= (b₀, b₁, ..., Dₘ₋₁₎, ^{→}ρₘₐₓ= (ρₘₐₓ, ρₘₐₓ, ... , _{ρmax}) , ρₘₐₓ=ₘₐₓ {ρ₀, ρ₁, ..., Pₘ₋₁}, |^{→}ρₘₐₓ|=m, der Gleitkommavektor (^{→}b, ^{→}ρₘₐₓ) m Gleitkommas 2^{ρ_max}b₀, 2^{ρ_max}b₁, ..., 2_{ρ_max}bₘ₋₁ darstellt und 2^{ρ_i}aᵢ≒2^{ρ_max}bᵢ, 0≦i<m erfüllt ist, unter Verwendung eines Systems zum Vereinheitlichen eines geheimen Exponententeils berechnet wird, das drei Stück oder mehr von Vorrichtungen zum Vereinheitlichen eines geheimen Exponententeils aufweist, wobei das Verfahren zum Vereinheitlichen eines geheimen Exponententeils Folgendes aufweist:
einen Maximalwertberechnungsschritt (S110), in dem das System zum Vereinheitlichen eines geheimen Exponententeils einen Anteil [[ρₘₐₓ]]^{Q} aus dem Anteil [[^{→}ρ]]^{Q} berechnet, wobei ρₘₐₓ=ₘₐₓ{ρ₀, ρ₁, ..., ρₘ₋₁} erfüllt ist;
einen Differenzberechnungsschritt (S120), in dem das System zum Vereinheitlichen eines geheimen Exponententeils einen Anteil [[^{→}ρ_{dif}]]^{Q}= [[^{→}ρ]]^{Q}- [[^{→}ρₘₐₓ]]^{Q} aus dem Anteil [[^{→}ρ]]^{Q} und dem Anteil [[ρₘₐₓ]]^{Q} berechnet;
einen Mantissenteilberechnungsschritt (S130), in dem das System zum Vereinheitlichen eines geheimen Exponententeils einen Anteil [[^{→}b]]^{P}= ([[b₀]]^{P}, [[b₁]]P, ..., [[bₘ₋₁]]^{P})aus dem Anteil [[^{→}a]]^{P} und dem Anteil [[^{→}ρ_{dif}]]^{Q}, für i, das 0≦i<m erfüllt ist, durch Berechnen eines Anteils [[bᵢ]]^{P}, vorausgesetzt, dass bᵢ=2^{-ρ_dif,i}aᵢ, der Zahl bi, die durch -ρ_{dif,i}-Bitverschiebung der Zahl aᵢ erhalten wird, aus dem i-ten Element [[aᵢ]]^{P} des Anteils [[^{→}a]]^{P} und dem i-ten Element <<ρ_{dif,i}>>^{Q} eines Anteils <<^{→}ρ_{dif}>>^{Q}, der durch replizierte Geheimnisteilung aus dem Anteil [[^{→}ρ_{dif}]]^{Q} umgewandelt wird; und
einen Ausgabeschritt (S140), in dem das System zum Vereinheitlichen eines geheimen Exponententeils den Anteil ([[^{→}b]]^{P}, [[^{→}ρₘₐₓ]]^{Q}) aus dem Anteil [[^{→}b]]P und dem Anteil [[^{→}ρₘₐₓ]]^{Q} erzeugt,
wobei
der Mantissenteilberechnungsschritt (S130), wobei p eine Anzahl von Bits der Primzahl P ist, M ein oberer Grenzwert ist, der durch die MSB-Position von einzugebenden numerischen Werten angenommen werden kann, M' ein oberer Grenzwert der MSB-Position ist, der durch Anteile zulässig ist, und [R, R'] ein Bereich des Rechtsverschiebungsbetrags ist, der durch eine geteilte Rechtsverschiebung abgedeckt ist, Folgendes enthält:
einen Schritt des Berechnens von Anteilen <<-ρ_{dif,i}>>^{Q} und <<-ρ_{dif,i}>>^{p} aus dem Anteil <<p_{dif,i}>>^{Q};
einen Schritt des Berechnens von Anteilen [[f₀]]²=[[(-p_{dif,i} ≥ -R')]]², [[f₁]]²=[[(-ρ_{dif,i} ≥ -R'+u)]]², ..., [[f_{d-1}]]²= [[(-ρ_{dif,i} ≥ -R'+(d-1)u]]² und [[f_{L}]]²=[[(-p_{dif,i} ≥ -R+1)]]² aus dem Anteil <<-ρ_{dif,i}>>^{Q} oder dem Anteil <<-ρ_{dif,i}>>^{p}, dem Bereich [R, R'], einem numerischen Wert u und einem numerischen Wert d, wobei u eine ganze Zahl ist, die u ≤ M'-M+1 erfüllt, und d eine ganze Zahl ist, die d ≥ ceiling(((R'-R+1)/u)_{Re}) erfüllt, wobei (X/Y)_{Re} den Wert der reellen Zahlenteilung für zwei Zahlen x, y darstellt;
einen Schritt des Berechnens von Anteilen <<f₁>>p*,* <<f₂>>^{p}, ..., <<f_{d-1}>>^{p}, <<f_{L}>>^{p} aus den Anteilen [[f₁]]², [[f₂]]², ..., [[f_{d-1}]]², [f_{L}]]² unter Verwendung von "mod 2 → mod p"-Umwandlung;
einen Schritt des Berechnens eines Anteils <<-ρ_{dif,i}'>>^{p}= <<-ρ_{dif,i}>>^{p}+R'-u(Σ_{1≤i<d}<<f>>^{p})+((d-1)u-R')<<f_{L}>>^{p} aus dem Anteil <<-ρ_{dif,i}>>^{p}, den Anteilen <<f₁>>^{p}, <<f₂>>^{p}, ..., <<f_{d-1}>>^{p}, <<f_{L}>>^{p}, dem oberen Grenzwert R' des Bereichs, dem numerischen Wert u und dem numerischen Wert d;
einen Schritt des Berechnens eines Anteils [[g]]^{P}=[[2^{-ρ dif,i'}aᵢ]]^{P} aus dem Anteil [[aᵢ]]^{P} und dem Anteil <<-ρ_{dif,i}>>^{p};
einen Schritt des Berechnens von Anteilen [[c₀]] ^{P}= [[2^{-ρ dif,i'}aᵢ/2^{R'}]]^{P}, [[c₁]]^{P}= [[2^{-ρ dif,i'}aᵢ/(2^{R'-u})]]^{P}..., [[c_{d-1}]^{P}=[[2^{-ρ dif,i'}aᵢ/(2^{R'-(d-1)u})]]^{P} aus dem Anteil [[g]]^{P} dem oberen Grenzwert R' des Bereichs, dem numerischen Wert u und dem numerischen Wert d unter Verwendung von öffentlicher Rechtsverschiebung von Massenverschiebungsbetrag ("bulk shift amount public right shift");
einen Schritt des Berechnens von Anteilen [[f₀]]^{P}, [[f₁]]^{P}, ..., [[f_{d-1}]]^{P}, [[f_{L}]]^{P} aus den Anteilen [[f₀]]², [[f₁]]², ..., [[f_{d-1}]]², [[f_{L}]]² unter Verwendung von "mod 2 → mod p"-Umwandlung; und
einen Schritt des Berechnens des Anteils [[bᵢ]]^{P}=[[C₀]]^{P}[[f₀]]^{P}+([[c₁]]^{P}-[[Cₒ]]^{P})[[f₁]]^{P}+ ... +([[C_{d-1}]]^{P}-[[c_{d-2}]]^{P})[[f_{d-1}]]^{P}+([[g]]^{P}-[[c_{d-1}]]^{P})[[f_{L}]]^{P} aus dem Anteil [[g]]^{P}, den Anteilen [[c₀]^{P}, [[c₁]]^{P}, ..., [[c_{d-1}]]^{P} und den Anteilen [[f₀]] ^{P}, [[f₁]]^{P}, ..., [[f_{d-1}]]^{P}, [[f_{L}]]^{P}.

4. System zum Berechnen einer geheimen Summe, wobei P eine Primzahl ist, Q eine Ordnung eines Restrings ist und [[x]]^{y} und <<x>>^{y} einen Anteil darstellen, in dem ein mod-y-Element x durch (k, n)-Geheimnisteilung bzw. (k, n)-replizierte Geheimnisteilung durchgeführt wird, wobei k ein Schwellenwert einer Geheimnisteilung ist und n eine Anzahl von Teilen der Geheimnisteilung ist, wobei das System zum Berechnen einer geheimen Summe drei Stück oder mehr von Vorrichtungen zum Berechnen einer geheimen Summe aufweist und aus einem Anteil ([[^{→}a]]^{P} [[^{→}ρ]]^{Q}) eines Gleitkommavektors (^{→}a, ^{→}ρ), vorausgesetzt, dass ^{→}a=(a₀, a₁, ..., aₘ₋₁), ^{→}ρ=(ρ₀, ρ₁, ..., ρₘ₋₁) und der Gleitkommavektor (^{→}a, ^{→}ρ) m Gleitkommas 2^{ρ_0}a_{0,} 2^{ρ_1}a₁, ..., 2^{ρ_m-1}aₘ₋₁ darstellt, einen Anteil ([[b]]^{P}, [[σ]]^{Q}) eines Gleitkommas (b, σ) berechnet, der eine Summe von Gleitkommas ist, die Elemente des Gleitkommavektors (^{→}a, ^{→}ρ) sind, vorausgesetzt, dass der Gleitkomma (b, σ) einen Gleitkomma 2^{σ}b darstellt und Σ_{0≦i<m}2^{ρ_i}aᵢ≒2^{σ}b erfüllt ist, wobei das System zum Berechnen einer geheimen Summe Folgendes aufweist:
ein Mittel (210) zum Vereinheitlichen eines Exponententeils, das aus dem Anteil ([[^{→}a]]^{P}, [[^{→}ρ]]^{Q}) einen Anteil ([[^{→}a']]^{P}, [[^{→}ρₘₐₓ]]^{Q}) eines Gleitkommavektors (^{→}a', ^{→}ρₘₐₓ) berechnet, der durch Vereinheitlichen von Exponententeilen des Gleitkommavektors (^{→}a, ^{→}ρ) erhalten wird, vorausgesetzt, dass ^{→}a'=(a'₀, a'₁, ..., a'ₘ₋₁), ^{→}ρₘₐₓ= (ρₘₐₓ, ρₘₐₓ, ..., ρₘₐₓ), ρₘₐₓ=max{ρ₀, ρ₁, ..., ρₘ₋₁}, |^{→}ρₘₐₓ|=m, der Gleitkommavektor (^{→}a', ^{→}ρₘₐₓ) m Gleitkommas 2^{ρ_max}a'₀, ₂^{ρ_max}a'₁, ..., 2^{ρ_max}a'ₘ₋₁ und 2^{ρ_i}aᵢ≒2^{ρ_max} a'ᵢ darstellt, 0≦i<ₘ erfüllt ist;
ein Summenberechnungsmittel (220), das den Anteil ([[b]]^{P}, [[σ]]^{Q}) aus dem Anteil ([[^{→}a']]^{P}, [^{→}ρₘₐₓ]]^{Q})durch Berechnen von [[b]]=[[Σ_{0≦i<m}a'i]] und [[σ]] =[[ρₘₐₓ]] berechnet; und
das Mittel (210) zum Vereinheitlichen eines Exponententeils unter Verwendung jedes Mittels konfiguriert ist, das in dem System zum Vereinheitlichen eines geheimen Exponententeils nach Anspruch 1 enthalten ist, und den Anteil ([[^{→}a']] ^{P}, [[^{→}ρₘₐₓ]]^{Q}) aus dem Anteil ([[^{→}a]]^{P}, [[^{→}ρ]]^{Q}) berechnet.

5. System zum Berechnen einer geheimen Produktsumme, wobei P eine Primzahl ist, Q eine Ordnung eines Restrings ist und [[x]]^{y} und <<x>>^{y} einen Anteil darstellen, in dem ein mod-y-Element x durch (k, n)-Geheimnisteilung bzw. (k, n)-replizierte Geheimnisteilung durchgeführt wird, wobei k ein Schwellenwert einer Geheimnisteilung ist und n eine Anzahl von Teilen der Geheimnisteilung ist, wobei das System zum Berechnen einer geheimen Produktsumme drei Stück oder mehr von Vorrichtungen zum Berechnen einer geheimen Produktsumme aufweist und aus einem Anteil ([[^{→}a]]^{P}, [[^{→}ρ]]^{Q}) eines Gleitkommavektors (^{→}a, ^{→}ρ), vorausgesetzt, dass ^{→}a=(a₀, a₁, ..., aₘ₋₁), ^{→}ρ=(ρ₀, ρ₁, ..., ρₘ₋₁) und der Gleitkommavektor (^{→}a, ^{→}ρ) m Gleitkommas 2^{ρ_0}a₀, 2^{ρ_1}a₁, ..., 2^{ρ_m-1}aₘ₋₁ darstellt, einen Anteil ([[^{→}b]]^{P}, [[σ]]^{Q}) eines Gleitkommavektors (^{→}b, ^{→}σ), vorausgesetzt, dass ^{→}b=(b₀, b₁*,* ..., bₘ₋₁), ^{→}σ=(σ₀, σ₁, ..., σₘ₋₁) und der Gleitkommavektor (^{→}b, ^{→}σ) m Gleitkommas 2^{σ_0}b₀, 2^{σ_1}b₁, ..., 2^{σ_m-1}bₘ₋₁ darstellt, einen Anteil ([[c]]^{P}, [[τ]]^{Q}) eines Gleitkommas (c, τ) berechnet, der eine Produktsumme von Gleitkommas von Elementen des Gleitkommavektors (^{→}a, ^{→}ρ) und Gleitkommas von Elementen des Gleitkommavektors (^{→}b, ^{→}σ) ist, vorausgesetzt, dass der Gleitkomma (c, τ) einen Gleitkomma 2^{τ}c darstellt und Σ_{0≦i<m}2^{ρ_i+σ_i}aᵢbᵢ≒2^{τ}c erfüllt ist, wobei das System zum Berechnen einer geheimen Produktsumme Folgendes aufweist:
ein Mittel (310) zum Vereinheitlichen eines Exponententeils, das aus dem Anteil ([[^{→}a]]^{P}, [[^{→}ρ]]^{Q}) und dem Anteil ([[^{→}b]]^{P}, [[^{→}σ]]^{Q}) einen Anteil ([[^{→}a']]^{P}, [[^{→}ρₘₐₓ]]^{Q}) eines Gleitkommavektors (^{→}a' ^{→}ρₘₐₓ) berechnet, der durch Vereinheitlichen von Exponententeilen des Gleitkommavektors (^{→}a, ^{→}ρ) erhalten wird, vorausgesetzt, dass ^{→}a' = (a' ₀ , a'1, ..., a'ₘ₋₁), ^{→}ρₘₐₓ= (ρₘₐₓ, ρₘₐₓ, ..., ρₘₐₓ)*,* ρₘₐₓ=max{ρ₀, ρ₁, ..., ρₘ₋₁}, |^{→}ρₘₐₓ|=m, der Gleitkommavektor (^{→}a' ^{→}ρₘₐₓ) m Gleitkommas 2^{ρ_max}a'₀, 2^{ρ_max}a'₁, ..., 2^{ρ_max}a'ₘ₋₁ und 2^{ρ_i}aᵢ≒2^{ρ_max} a'ᵢ darstellt, 0≦i<m erfüllt ist, und einen Anteil ([[^{→}b']] ^{P}, [[^{→}σₘₐₓ]]^{Q}) eines Gleitkommavektors (^{→}b', ^{→}σₘₐₓ) berechnet, der durch Vereinheitlichen von Exponententeilen des Gleitkommavektors (^{→}b, ^{→}σ) erhalten wird, vorausgesetzt, dass ^{→}b' =(b'₀, b'₁, ..., b'ₘ₋₁), ^{→}σₘₐₓ= (σₘₐₓ , σₘₐₓ, ..., σₘₐₓ) *,* σₘₐₓ=max{σ₀, σ₁, ..., σm-₁}, |^{→}σₘₐₓ|=m, der Gleitkommavektor (^{→}b', ^{→}σₘₐₓ) m Gleitkommas 2^{σ_max}b'₀, 2^{σ_max}b'₁, ..., 2^{σ_max}b'ₘ₋₁ und 2^{σ}-ⁱbᵢ≒2^{σ_max}b'ᵢ darstellt, 0≦i<m erfüllt ist;
ein Produktsummenberechnungsmittel (320), das den Anteil ([[c]]^{P}, [[τ]]^{Q}) aus dem Anteil ([[^{→}a']]^{P}, [[^{→}ρₘₐₓ]]^{Q}) und dem Anteil ([[^{→}b']]^{P}, [[^{→}σₘₐₓ]]^{Q}) durch Berechnen von [[c]]=[[∑_{0≦i<m}a'ᵢb'ᵢ]] und [[τ]]=[[ρₘₐₓ+σₘₐₓ]] berechnet; und
das Mittel (310) zum Vereinheitlichen eines Exponententeils unter Verwendung jedes Mittels konfiguriert ist, das in dem System zum Vereinheitlichen eines geheimen Exponententeils nach Anspruch 1 enthalten ist, und den Anteil ([[^{→}a']]^{P}, [[^{→}ρₘₐₓ]]^{Q}) und den Anteil ([[^{→}b']]^{P}, [[^{→}σₘₐₓ]]^{Q}) aus dem Anteil ([[^{→}a]]^{P}, [[^{→}ρ]]^{Q}) bzw. dem Anteil ([[^{→}b]]^{P}, [[^{→}σ]]^{Q}) berechnet.

6. Programm zum Veranlassen, dass ein Computer als die Vorrichtung zum Vereinheitlichen eines geheimen Exponententeils nach Anspruch 2 fungiert.

## Revendications

1. Système d'uniformisation de partie d'exposant secret où P est un nombre premier, Q est un ordre d'un anneau résiduel, et [[x]]^{y} et <<x>>^{y} représentent un partage dans lequel un élément mod y x est effectué par un partage de secret (k, n) et un partage de secret (k, n) répliqué, respectivement, où k est une valeur de seuil d'un partage de secret et n est un nombre de partage du partage de secret, le système d'uniformisation de partie d'exposant secret qui est composé de trois éléments ou plus d'appareils d'uniformisation de partie d'exposant secret et calcule, à partir d'un partage ([[^{→}a]]^{P}, [[^{→}ρ]]^{Q}) d'un vecteur à virgule flottante (→a, ^{→}ρ), à condition que ^{→}a=(a₀, a₁, ..., aₘ₋₁), ^{→}ρ=(ρ₀, ρ₁, ..., ρₘ₋₁), et que le vecteur à virgule flottante (^{→}a, ^{→}ρ) représente m virgules flottantes 2^{ρ_0}a₀, 2^{ρ_1}a₁, ..., 2^{ρ_m-1}aₘ₋₁, un partage ([[^{→}b]]^{P}, [[^{→}ρₘₐₓ]]^{Q}) d'un vecteur à virgule flottante (^{→}b, →ρₘₐₓ) obtenu en uniformant des parties d'exposant du vecteur à virgule flottante (→a, ^{→}ρ), à condition que ^{→}b=(b₀, b₁, ..., bₘ₋₁), →ρₘₐₓ= (ρₘₐₓ , ρₘₐₓ , ..., ρₘₐₓ), ρₘₐₓ=max{ρ₀, ρ₁, ..., ρₘ₋₁}, |→ρₘₐₓ| =m, le vecteur à virgule flottante (^{→}b, ^{→}ρₘₐₓ) représente m virgules flottantes 2^{ρ_max}b₀, 2^{ρ_max}b₁, ..., 2^{ρ_max}bₘ₋₁, et 2^{ρ_i}aᵢ≒2^{ρ_max}bᵢ, 0≦i<m est satisfait, le système d'uniformisation de partie d'exposant secret comprenant : un moyen de calcul de valeur maximale (110) pour calculer une part [[ρₘₐₓ]]^{Q} à partir de la part [[^{→}ρ]]^{Q}, où ρₘₐₓ=max{ρ₀, ρ₁, ..., ρₘ₋₁} est satisfait ;
un moyen de calcul de différence (120) pour calculer une part [[^{→}ρ_{dif}]]^{Q}=[[^{→}ρ]]^{Q}-[[ρₘₐₓ]]^{Q} à partir de la part [[^{→}ρ]]^{Q} et de la part [[ρₘₐₓ]]^{Q} ;
un moyen de calcul de partie de mantisse (130) pour calculer une part [[^{→}b]]^{P}=([[b₀]]^{P}, [[b₁]]^{P}, ..., [[bₘ₋₁]]^{P}) à partir de la part [[^{→}a]]^{P} et de la part [[^{→}ρ_{dif}]]^{Q}, pour i qui est satisfait 0≦i<m, en calculant une part [[bᵢ]]^{P}, à condition que bᵢ=2^{-ρ_dif,i}aᵢ, du nombre bi qui est obtenu par un décalage binaire -ρ_{dif,i} du nombre aᵢ, à partir du ième élément [[aᵢ]]^{P} de la part [[^{→}a]]^{P} et du ième élément <<ρ_{dif,i}>>^{Q} d'une part <<→ρ_{dif}>>^{Q} convertie par un partage de secret répliqué à partir de la part [[^{→}ρ_{dif}]]^{Q} ; et un moyen de sortie (140) pour générer la part ([[^{→}b]]^{P}, [[→ρₘₐₓ]]^{Q}) à partir de la part [[^{→}b]]^{P} et de la part [[→ρₘₐₓ]]^{Q},
dans lequel
le moyen de calcul de partie de mantisse (130), où p est un nombre de bits du nombre premier P, M est une valeur limite supérieure qui peut être prise par la position MSB de valeurs numériques à entrer, M' est une valeur limite supérieure de la position MSB qui est admissible par des parts, et [R, R'] est une plage de la quantité de décalage à droite qui est couverte par un décalage à droite divisé, calcule des parts <<-ρ_{dif,i}>>^{Q} et <<-ρ_{dif,i}>>^{p} à partir de la part <<ρ_{dif,i}>>^{Q} ;
calcule des parts [[f₀]]²=[[(-ρ_{dif,i} ≥ -R')]]², [[f₁]]²=[[(-ρ_{dif,i} ≥ -R'+u)]]², ..., [[f_{d-1}]]²=[[(-ρ_{dif,i} ≥ -R'+(d-1)u]]², et [[f_{L}]]²=[[(-ρ_{dif,i} ≥ -R+1)]]² à partir de la part <<-ρ_{dif,i}>>^{Q} ou de la part <<-ρ_{dif,i}>>^{p}, de la plage [R, R'], d'une valeur numérique u, et d'une valeur numérique d où u est un nombre entier satisfaisant u ≤ M'-M+1 et d est un nombre entier satisfaisant d ≥ plafond(((R'-R+1)/u)_{Re}), où (x/y)_{Re} représente la valeur de division de nombre réel pour deux nombres x, y ;
calcule, en utilisant une conversion mod 2 → mod p, des parts <<f₁>>^{p}, <<f₂>>^{p}, ..., <<f_{d-1}>>^{p}, <<f_{L}>>^{p} à partir des parts [[f₁]]², [[f₂]]², ..., [[f_{d-1}]]², [[f_{L}]]² ;
calcule une part <<-ρ_{dif,i}'>>^{p}= <<-ρ_{dif,i}>>^{p}+R' - u(Σ_{1≤i<d}<<fᵢ>>^{p}) + ((d-1)u-R')<<f_{L}>>^{p} à partir de la part <<-ρ_{dif,i}>>^{p}, des parts <<f₁>>^{p}, <<f₂>>^{p}, ..., <<f_{d-1}>>^{p}, <<f_{L}>>^{p}, de la valeur limite supérieure R' de la plage, de la valeur numérique u, et de la valeur numérique d ;
calcule une part [[g]]^{P}=[[2^{-ρ dif,i}'aᵢ]]^{P} à partir de la part [[aᵢ]]^{P} et de la part <<-ρ_{dif,i}'>>^{p} ;
calcule, en utilisant un décalage à droite public de quantité de décalage global, des parts [[c₀]]^{P}=[[2^{-ρ dif,i'}aᵢ/2^{R'}]]^{P}, [[c₁]]^{P}=[[2^{-ρ dif,i'}aᵢ/(2^{R'-u})]]^{P}, .., [[c_{d-1}]]^{P}= [[2^{-ρ dif,i'}aᵢ/(2^{R'-(d-1)u)}]]^{P} à partir de la part [[g]]^{P}, de la valeur limite supérieure R' de la plage, de la valeur numérique u, et de la valeur numérique d ;
calcule, en utilisant une conversion mod 2 → mod P, des parts [[f₀]]^{P}, [[f₁]]^{P}, ..., [[f_{d-1}]]^{P}, [[f_{L}]]^{P} à partir des parts [[f₀]]², [[f₁]]², ..., [[f_{d-1}]]², [[f_{L}]]² ; et calcule la part [[bᵢ]]^{P}=[[c₀]]^{P}[[f₀]]^{P}+([[c₁]]^{P}-[[c₀]]^{P})[[f₁]]^{P}+ ... + ([[c_{d-1}]]^{P}-[[c_{d-2}]]^{P})[[f_{d-1}]]^{P}+([g]]^{P}-[[c_{d-1}]]^{P})[[f_{L}]]^{P} à partir de la part [[g]]^{P}, des parts [[c₀]]^{P}, [[c₁]]^{P}, ..., [[c_{d-1}]]^{P}, et des parts [[f₀]]^{P}, [[f₁]]^{P}, ..., [[f_{d-1}]]^{P}, [[f_{L}]]^{P}.

2. Appareil d'uniformisation de partie d'exposant secret dans un système d'uniformisation de partie d'exposant secret où P est un nombre premier, Q est un ordre d'un anneau résiduel, et [[x]]^{y} et <<x>>^{y} représentent une part dans laquelle un élément mod y x est effectué par un partage de secret (k, n) et un partage de secret (k, n) répliqué, respectivement, où k est une valeur de seuil d'un partage de secret et n est un nombre de partage du partage de secret, le système d'uniformisation de partie d'exposant secret qui est composé de trois éléments ou plus d'appareils d'uniformisation d'exposant secret et calcule, à partir d'une part ([[^{→}a]]^{P}, [[^{→}ρ]]^{Q}) d'un vecteur de virgule flottante (→a, ^{→}ρ), à condition que ^{→}a=(a₀, a₁, ..., aₘ₋₁), ^{→}ρ=(ρ₀, ρ₁, ..., ρₘ₋₁), et que le vecteur de virgule flottante (→a, ^{→}ρ) représente m virgules flottantes 2^{ρ}-⁰a₀, 2^{ρ_1}a₁, ... , 2^{ρ_m-1}aₘ₋₁, une part ([[^{→}b]]^{P}, [[^{→}ρₘₐₓ]]^{Q}) d'un vecteur de virgule flottante (^{→}b, ^{→}ρₘₐₓ) qui est obtenue en uniformant des parties d'exposant du vecteur de virgule flottante (→a, →ρ), à condition que ^{→}b=(b₀, b₁, ..., bₘ₋₁), →ρₘₐₓ=(ρₘₐₓ, ρₘₐₓ, ..., ρₘₐₓ), ρₘₐₓ=max{ρ₀, ρ₁, ..., ρₘ₋₁}, ||→ρₘₐₓ|=m, le vecteur de virgule flottante (^{→}b, ^{→}ρₘₐₓ) représente m virgules flottantes 2^{ρ_max}b₀, 2^{ρ_max}b₁, ..., 2^{ρ_max}bₘ₋₁, et 2^{ρ_i}aᵢ≒2^{ρ_max}bᵢ, 0≦i<m est satisfait, l'appareil d'uniformisation de partie d'exposant secret comprenant : une unité de calcul de valeur maximale (110) qui calcule une part [[ρₘₐₓ]]^{Q} à partir de la part [[^{→}ρ]]^{Q}, où ρₘₐₓ=max{ρ₀, ρ₁, ..., ρₘ₋₁} est satisfait ;
une unité de calcul de différence (120) qui calcule une part [[^{→}ρ_{dif}]]^{Q}=[[^{→}ρ]]^{Q}-[[^{→}ρₘₐₓ]]^{Q} à partir de la part [[^{→}ρ]]^{Q} et de la part [[ρₘₐₓ]]^{Q} ;
une unité de calcul de partie de mantisse (130) qui calcule une part [[^{→}b]]^{P}=([[b₀]]^{P}, [[b₁]]^{P}, ..., [[bₘ₋₁]]^{P}) à partir de la part [[^{→}a]]^{P} et de la part [[^{→}ρ_{dif}]]^{Q}, pour i qui est satisfait 0≦i<m, en calculant une part [[bᵢ]]^{P}, à condition que bᵢ=2^{-ρ_dif,i}aᵢ, du nombre bi qui est obtenu par un décalage binaire -ρ_{dif,i} du nombre aᵢ, à partir du ième élément [[aᵢ]]^{P} de la part [[^{→}a]]^{P} et du ième élément <<ρ_{dif,i}>>^{Q} d'une part <<^{→}ρ_{dif}>>^{Q} convertie par un partage de secret répliqué à partir de la part [[→ρ_{dif}]]^{Q} ; et
une unité de sortie (140) qui génère la part ([[^{→}b]]^{P}, [[^{→}ρₘₐₓ]]^{Q}) à partir de la part [[^{→}b]]^{P} et de la part [[^{→}ρₘₐₓ]]^{Q},
dans lequel
l'unité de calcul de partie de mantisse (130), où p est un nombre de bits du nombre premier P, M est une valeur limite supérieure qui peut être prise par la position MSB de valeurs numériques à entrer, M' est une valeur limite supérieure de la position MSB qui est admissible par des parts, et [R, R'] est une plage de la quantité de décalage à droite qui est couverte par un décalage à droite divisé, calcule des parts <<-ρ_{dif,i}>>^{Q} et <<-ρ_{dif,i}>>^{p} à partir de la part <<ρ_{dif,i}>>^{Q} ;
calcule des parts [[f₀]]²=[[(-ρ_{dif,i} ≥ -R')]]², [[f₁]]²=[[(-ρ_{dif,i} ≥ -R'+u)]]², ..., [[f_{d-1}]]²=[[(-ρ_{dif,i} ≥ -R'+(d-1)u]]², et [[f_{L}]]²=[[(-ρ_{dif,i} ≥ -R+1)]]² à partir de la part <<-ρ_{dif,i}>>^{Q} ou de la part <<-ρ_{dif,i}>>^{p}, de la plage [R, R'], d'une valeur numérique u, et d'une valeur numérique d où u est un nombre entier satisfaisant u ≤ M'-M+1 et d est un nombre entier satisfaisant d ≥ plafond(((R'-R+1)/u)_{Re}), où (x/y)_{Re} représente la valeur de division de nombre réel pour deux nombres x, y ;
calcule, en utilisant une conversion mod 2 → mod p, des parts <<f₁>>^{p}, <<f₂>>^{p}, ..., <<f_{d-1}>>^{p}, <<f_{L}>>^{p} à partir des parts [[f₁]]², [[f₂]]², ..., [[f_{d-1}]]²,[[f_{L}]]² ;
calcule une part <<-ρ_{dif,i}'>>^{p}= <<-ρ_{dif,i}>>^{p}+R'-u(Σ_{1≤i<d}<<fᵢ>>^{p})+((d-1)u-R') <<f_{L}>>^{p} à partir de la part <<-ρ_{dif,i}>>^{p}, des parts <<f₁>>^{p}, <<f₂>>^{p}, ... , <<f_{d-1}>>^{p}, <<f_{L}>>^{p}, de la valeur limite supérieure R' de la plage, de la valeur numérique u, et de la valeur numérique d ;
calcule une part [[g]]^{P}=[[2^{-ρ dif,i'}aᵢ]]^{P} à partir de la part [[aᵢ]]^{P} et de la part <<-ρ_{dif,i}'>>^{p} ;
calcule, en utilisant un décalage à droite public de quantité de décalage global, des parts [[c₀]]^{P}=[[2^{-ρ dif,i'}aᵢ/2^{R'}]]^{P}, [[c₁]]^{P}=[[2^{-ρ dif,i'}aᵢ/(2^{R'-u})]]^{P}, ..., [[c_{d-1}]]^{P}=[[2^{-ρ dif,i'}aᵢ/(2^{R'-(d-1)u)}]]^{P} à partir de la part [[g]]^{P}, de la valeur limite supérieure R' de la plage, de la valeur numérique u, et de la valeur numérique d ; calcule, en utilisant une conversion mod 2 → mod P, des parts [[f₀]]^{P}, [[f₁]]^{P}, ..., [[f_{d-1}]]^{P}, [[f_{L}]]^{P} à partir des parts [[f₀]]², [[f₁]]², ..., [[f_{d-1}]]², [[f_{L}]]² ; et calcule la part [[bᵢ]]^{P}=[[c₀]]^{P}[[f₀]]^{P}+([[c₁]]^{P}-[[c₀]]^{P})[[f₁]]^{P}+ ... + ([[c_{d-1}]]^{P}-[[c_{d-2}]]^{P})[[f_{d-1}]]^{P}+([[g]]^{P}-[[c_{d-1}]]^{P})[[f_{L}]]^{P} à partir de la part [[g]]^{P}, des parts [[c₀]]^{P}, [[c₁]]^{P}, ..., [[c_{d-1}]]^{P}, et des parts [[f₀]]^{P}, [[f₁]]^{P}, ..., [[f_{d-1}]]^{P}, [[f_{L}]]^{P}.

3. Procédé d'uniformisation de partie d'exposant de secret où P est un nombre premier, Q est un ordre d'un anneau de résidu, et [[x]]^{Y} et <<x>>^{y} représentent une part dans laquelle un élément mod y x est effectué par un partage de secret (k, n) et un partage de secret (k, n) répliqué, respectivement, où k est une valeur de seuil d'un partage de secret et n est un nombre de partage du partage de secret, le procédé d'uniformisation de partie d'exposant de secret par lequel, à partir d'une part ([[^{→}a]]^{P}, [[^{→}ρ]]^{Q}) d'un vecteur à virgule flottante (^{→}a, ^{→}ρ), à condition que ^{→}a=(a₀, a₁, ..., aₘ₋₁), ^{→}ρ=(ρ₀, ρ₁, ..., ρₘ₋₁), et que le vecteur à virgule flottante (^{→}a, ^{→}ρ) représente m virgules flottantes 2^{ρ_0}a₀, 2ρ_¹a₁, ..., 2^{ρ}_^{m-1}aₘ₋₁, une part ([[^{→}b]]^{P}, [[^{→}ρₘₐₓ]]^{Q}) d'un vecteur à virgule flottante (^{→}b, ^{→}ρₘₐₓ) qui est obtenue en uniformant des parties d'exposant du vecteur à virgule flottante (→a, →ρ), à condition que ^{→}b=(b₀, b₁, ..., bₘ₋₁), →ρₘₐₓ=(ρₘₐₓ, ρₘₐₓ, ..., ρₘₐₓ), ρₘₐₓ=max{ρ₀, ρ₁, ..., ρₘ₋₁}, |→pₘₐₓ|=m, le vecteur à virgule flottante (^{→}b, ^{→}ρₘₐₓ) représente m virgules flottantes 2^{ρ_max}b₀, 2^{ρ_max}b₁, ..., 2^{ρ_max}bₘ₋₁, et 2^{ρ_i}aᵢ≒2^{ρ_max}bᵢ, 0≦i<m est satisfait, est calculé en utilisant un système d'uniformisation de partie d'exposant de secret composé de trois éléments ou plus d'appareils d'uniformisation de partie d'exposant de secret, le procédé d'uniformisation de partie d'exposant de secret comprenant :
une étape de calcul de valeur maximale (S110) dans laquelle le système d'uniformisation de partie d'exposant de secret calcule une part [[ρₘₐₓ]]^{Q} à partir de la part [[^{→}ρ]]^{Q}, où ρₘₐₓ=max{ρ₀, ρ₁, ... , ρₘ₋₁} est satisfait ;
une étape de calcul de différence (S120) dans laquelle le système d'uniformisation de partie d'exposant de secret calcule une part [[^{→}ρ_{dif}]]^{Q}=[[^{→}ρ]]^{Q}-[[^{→}ρₘₐₓ]]^{Q} à partir de la part [[^{→}ρ]]^{Q} et de la part [[ρₘₐₓ]]^{Q} ;
une étape de calcul de partie de mantisse (S130) dans laquelle le système d'uniformisation de partie d'exposant de secret calcule une part [[→b]]^{P}=([[b₀]]^{P}, [[b₁]]^{P}, ..., [[bₘ₋₁]]^{P}) à partir de la part [[^{→}a]]^{P} et de la part [[^{→}ρ_{dif}]]^{Q}, pour i qui est satisfait 0≦i<m, en calculant une part [[bᵢ]]^{P}, à condition que bᵢ=2^{-ρ_dif,i}aᵢ, du nombre bi qui est obtenu par un décalage binaire -ρ_{dif,i} du nombre aᵢ, à partir du ième élément [[aᵢ]]^{P} de la part [[^{→}a]]^{P} et du ième élément <<ρ_{dif,i}>>^{Q} d'une part <<^{→}ρ_{dif}>>^{Q} convertie par un partage de secret répliqué à partir de la part [[^{→}ρ_{dif}]]^{Q} ; et
une étape de sortie (S140) dans laquelle le système d'uniformisation de partie d'exposant de secret génère la part ([[^{→}b]]^{P}, [[^{→}pₘₐₓ]]^{Q}) à partir de la part [[^{→}b]]^{P} et de la part [[^{→}ρₘₐₓ]]^{Q},
dans lequel
l'étape de calcul de partie de mantisse (S130), où p est un nombre de bits du nombre premier P, M est une valeur limite supérieure qui peut être prise par la position MSB de valeurs numériques à entrer, M' est une valeur limite supérieure de la position MSB qui est admissible par des parts, et [R, R'] est une plage de la quantité de décalage à droite qui est couverte par un décalage à droite divisé, comprend une étape de calcul de parts <<-ρ_{dif,i}>>^{Q} et <<-ρ_{dif,i}>>^{p} à partir de la part <<ρ_{dif,i}>>^{Q} ;
une étape de calcul de parts [[f₀]]²=[[(-ρ_{dif,i} ≥ -R')]]², [[f₁]]²=[[(-ρ_{dif,i} ≥ -R'+u)]]², ..., [[f_{d-1}]]²=[[(-ρ_{dif,i} ≥ - R' + (d-1)u]]², et [[f_{L}]]²=[[(-ρ_{dif,i} ≥ -R+1]]² à partir de la part <<-ρ_{dif,i}>>^{Q} ou de la part <<-ρ_{dif,i}>>^{P}, de la plage [R, R'], d'une valeur numérique u, et d'une valeur numérique d où u est un nombre entier satisfaisant u ≤ M'-M+1 et d est un nombre entier satisfaisant d ≥ plafond(((R'-R+1)/u)_{Re}), où (x/y)_{Re} représente la valeur de division de nombre réel pour deux nombres x, y ;
une étape de calcul, en utilisant une conversion mod 2 → mod p, de parts <<f₁>>^{p}, <<f₂>>^{p}, ..., <<f_{d-1}>>^{p}, <<f_{L}>>^{p} à partir des parts [[f₁]]², [[f₂]]², ..., [[f_{d-1}]]², [[f_{L}]]² ; une étape de calcul d'une part <<-p_{dif,i}'>>^{p}= <<-p_{dif,i}>>^{p}+R'-u(Σ_{1≤i<d}<<fᵢ>>^{p}) + ((d-1)u-R')<<f_{L}>>^{p} à partir de la part <<-ρ_{dif,i}>>^{p}, des parts <<f₁>>^{p}, <<f₂>>^{p}, ..., <<f_{d-1}>>^{p}, <<f_{L}>>^{p}, de la valeur limite supérieure R' de la plage, de la valeur numérique u, et de la valeur numérique d ;
une étape de calcul d'une part [[g]]^{P}= [[2^{-ρ dif,i'}aᵢ]]^{P} à partir de la part [[aᵢ]]^{P} et de la part <<-ρ_{dif,i}'>>^{p} ;
une étape de calcul, en utilisant un décalage à droite public de quantité de décalage global, de parts [[c₀]]^{P}=[[2^{-ρ dif,i'}aᵢ/2^{R'}]]^{P}, [[c₁]]^{P}=[[2^{-ρ dif,i'}aᵢ/(2^{R'-u})]]^{P}, ..., [[c_{d-1}]]^{P}=[[2^{-ρ dif,i'}aᵢ/(2^{R'-(d-1)u})]]^{p} à partir de la part [[g]]^{P}, de la valeur limite supérieure R' de la plage, de la valeur numérique u, et de la valeur numérique d ;
une étape de calcul, en utilisant une conversion mod 2 → mod P, de parts [[f₀]]^{P}, [[f₁]]^{P}, ..., [[f_{d-1}]]^{P}, [f_{L}]]^{P} à partir des parts [[f₀]]², [[f₁]]², ..., [[f_{d-1}]]², [[f_{L}]]² ; et
une étape de calcul de la part [[bᵢ]]^{P}=[[c₀]]^{P}[[f₀]]^{P}+([[c₁]]^{P}-[[c₀]]^{P})[[f₁]]^{P}+ ... +([[c_{d-1}]]^{P}-[[c_{d-2}]]^{P})[[f_{d-1}]]^{P}+([g]]^{P}-[[c_{d-1}]]^{P})[[f_{L}]]^{P} à partir de la part [[g]]^{P}, des parts [[c₀]]^{P}, [[c₁]]^{P}, ..., [[c_{d-1}]]^{P}, et des parts [[f₀]]^{P}, [[f₁]]^{P}, ..., [[f_{d-1}]]^{P}, [f_{L}]]^{P}.

4. Système de calcul de somme secrète où P est un nombre premier, Q est un ordre d'un anneau résiduel, et [[x]]^{y} et <<x>>^{y} représentent un partage dans lequel un élément mod y x est effectué par un partage de secret (k, n) et un partage de secret (k, n) répliqué, respectivement, où k est une valeur de seuil d'un partage de secret et n est un nombre de partage du partage de secret, le système de calcul de somme secrète qui est composé de trois éléments ou plus d'appareils de calcul de somme secrète et calcule, à partir d'un partage ([[^{→}a]]^{P}, [[^{→}ρ]]^{Q}) d'un vecteur à virgule flottante (^{→}a, ^{→}ρ), à condition que ^{→}a=(a₀, a₁, ..., aₘ₋₁), ^{→}ρ=(ρ₀, ρ₁, ..., ρₘ₋₁), et que le vecteur à virgule flottante (^{→}a, ^{→}ρ) représente m virgules flottantes 2^{ρ_0}a₀, 2^{ρ}_¹a₁, ..., 2^{ρ_m-1}aₘ₋₁, un partage ([[b]]^{P}, [[σ]]^{Q}) d'un virgule flottante (b, σ) qui est une somme de virgules flottantes qui sont des éléments du vecteur à virgule flottante (^{→}a, ^{→}ρ), à condition que le virgule flottante (b, σ) représente un virgule flottante 2σb et que ∑_{0≦i<m}2^{ρ_}iai≒2^{σ}b est satisfait, le système de calcul de somme secrète comprenant :
un moyen d'uniformisation de partie d'exposant (210) qui calcule, à partir de la part ([[^{→}a]]^{P}, [[^{→}ρ]]^{Q}), une part ([[^{→}a']]^{P}, [[^{→}pₘₐₓ]]^{Q}) d'un vecteur à virgule flottante (^{→}a', ^{→}ρₘₐₓ) qui est obtenu en uniformant des parties d'exposant du vecteur à virgule flottante (^{→}a, ^{→}ρ), à condition que ^{→}a'=(a'₀, a'₁, ..., a'ₘ₋₁), ^{→}ρₘₐₓ=(ρₘₐₓ, ρₘₐₓ, ..., ρₘₐₓ), ρₘₐₓ=max{ρ₀, ρ₁, ..., ρₘ₋₁}, |^{→}ρₘₐₓ|=m, le vecteur à virgule flottante (^{→}a', ^{→}ρₘₐₓ) représente m virgules flottantes 2^{ρ_max}a'₀, 2^{ρ_max}a'₁, ..., 2^{ρ_max}a'ₘ₋₁, et 2^{ρ_i}aᵢ≒2^{ρ_max} a'ᵢ, 0≦i<m est satisfait ;
un moyen de calcul de somme (220) qui calcule la part ([[b]]^{P}, [[σ]]^{Q}) à partir de la part ([[→a']]^{P}, [[^{→}ρₘₐₓ]]^{Q}), en calculant [[b]]=[[Σ_{0≦i<m}a'i]] et [[σ]]=[[ρₘₐₓ]] ; et
le moyen d'uniformisation de partie d'exposant (210) est configuré en utilisant chaque moyen inclus dans le système d'uniformisation de partie d'exposant de secret selon la revendication 1 et calcule la part ([[^{→}a']]^{P}, [[^{→}pₘₐₓ]]^{Q}) à partir de la part ([[→a]]^{P}, [[^{→}ρ]]^{Q}).

5. Système de calcul de somme de produit secrète où P est un nombre premier, Q est un ordre d'un anneau résiduel, et [[x]]^{y} et <<x>>^{y} représentent un partage dans lequel un élément mod y x est effectué par un partage de secret (k, n) et un partage de secret (k, n) répliqué, respectivement, où k est une valeur de seuil d'un partage de secret et n est un nombre de partage du partage de secret, le système de calcul de somme de produit secrète qui est composé de trois éléments ou plus d'appareils de calcul de somme de produit secrète et calcule, à partir d'un partage ([[^{→}a]]^{P} [[→ρ]]^{Q}) d'un vecteur à virgule flottante (^{→}a, ^{→}ρ), à condition que ^{→}a=(a₀, a₁, ..., aₘ₋₁), ^{→}ρ=(ρ₀, ρ₁, ..., ρₘ₋₁), et que le vecteur à virgule flottante (^{→}a, ^{→}ρ) représente m virgules flottantes 2^{ρ_0}a₀, 2^{ρ_1}a₁, ... , 2^{ρ_m-1}aₘ₋₁ et un partage ([[^{→}b]]^{P}, [[^{→}σ]]^{Q}) d'un vecteur à virgule flottante (^{→}b, ^{→}σ), à condition que ^{→}b=(b₀, b₁, ..., bₘ₋₁), ^{→}σ=(σ₀, σ₁, ..., σᵣₙ₋₁) et que le vecteur à virgule flottante (^{→}b, ^{→}σ) représente m virgules flottantes 2^{σ_0}b₀, 2^{σ_1}b₁, ..., 2^{σ_m-1}bₘ₋₁, un partage ([[c]]^{P}, [[τ]]^{Q}) d'un virgule flottante (c, τ) qui est une somme de produit de virgules flottantes d'éléments du vecteur à virgule flottante (^{→}a, ^{→}ρ) et de virgules flottantes d'éléments du vecteur à virgule flottante (^{→}b, ^{→}σ), à condition que le virgule flottante (c, τ) représente un virgule flottante 2τc et que Σ₀≦_{i<m}2^{ρ_i+σ}_iaibi≒2τc est satisfait, le système de calcul de somme de produit secrète comprenant :
un moyen d'uniformisation de partie d'exposant (310) qui, à partir de la part ([[^{→}a]]^{P}, [[^{→}ρ]]^{Q}) et de la part ([[^{→}b]]^{P}, [[^{→}σ]]^{Q}), calcule une part ([[^{→}a']]^{P}, [[^{→}ρₘₐₓ]]^{Q}) d'un vecteur à virgule flottante (^{→}a', ^{→}ρₘₐₓ) qui est obtenu en uniformant des parties d'exposant du vecteur à virgule flottante (^{→}a, ^{→}ρ), à condition que ^{→}a'=(a'₀, a'₁, ..., a'ₘ₋₁), ^{→}ρₘₐₓ= (ρₘₐₓ , ρₘₐₓ, ..., ρₘₐₓ), ρₘₐₓ=max{ρ₀, ρ₁, ..., ρₘ₋₁}, |→ρₘₐₓ|=m, le vecteur à virgule flottante (^{→}a', ^{→}ρₘₐₓ) représente m virgules flottantes 2^{ρ_max}a'₀, 2^{ρ_max}a'₁, ..., 2^{ρ_max}a'ₘ₋₁, et 2^{ρ_i}aᵢ≒2^{ρ_max} a'ᵢ, 0≦i<m est satisfait, et une part ([[^{→}b']]^{P}, [[^{→}σₘₐₓ]]^{Q}) d'un vecteur à virgule flottante (^{→}b', ^{→}σₘₐₓ) qui est obtenu en uniformant des parties d'exposant du vecteur à virgule flottante (→b, ^{→}σ), à condition que ^{→}b'=(b'₀, b'1, ..., b'ₘ₋₁), ^{→}σₘₐₓ=(σₘₐₓ, σₘₐₓ, ..., σₘₐₓ), σₘₐₓ=max{σ₀, σ₁*,* ..., σₘ₋₁}, |^{→}σₘₐₓ|=m, le vecteur à virgule flottante (^{→}b' , ^{→}σₘₐₓ) représente m virgules flottantes 2^{σ_max}b'₀, 2^{σ_max}b'₁, ..., 2^{σ_max}b'_{m -1}, et 2^{σ_i}bᵢ≒2^{σ_max}b'ᵢ, 0≦i<m est satisfait ;
un moyen de calcul de somme de produit (320) qui calcule la part ([[c]]^{P}, [[τ]]^{Q}) à partir de la part ([[^{→}a']]^{P}, [[^{→}ρₘₐₓ]]^{Q}) et de la part ([[^{→}b']]^{P}, [[^{→}σₘₐₓ]]^{Q}), en calculant [[c]]=[[Σ_{0≦i<m}a'ᵢb'ᵢ]] et [[τ]]=[[ρₘₐₓ+σₘₐₓ]] ; et
le moyen d'uniformisation de partie d'exposant (310) est configuré en utilisant chaque moyen inclus dans le système d'uniformisation de partie d'exposant de secret selon la revendication 1 et calcule la part ([[^{→}a']]^{P}, [[^{→}ρₘₐₓ]]^{Q}) et la part ([[^{→}b']]^{P}, [[^{→}σₘₐₓ]]^{Q}) à partir de la part ([[^{→}a]]^{P}, [[→ρ]]^{Q}) et de la part ([[^{→}b]]^{P}, [[^{→}σ]]^{Q}), respectivement.

6. Programme pour amener un ordinateur à fonctionner en tant qu'appareil d'uniformisation de partie d'exposant de secret selon la revendication 2.
